# EUROPEAN PATENT SPECIFICATION

(11) **EP 0 862 587 B1**
(45) Date of publication and mention of the grant of the patent: **25.09.2002**
(21) Application number: 96915304.8
(22) Date of filing: 29.03.1996
(51) Int. Cl.: C08F 4/68, C08F 10/00

(54) **VANADIUM-CONTAINING CATALYST SYSTEM**
VANADIUM ENTHALTENDES KATALYSATORSYSTEM
SYSTEME CATALYSEUR CONTENANT DU VANADIUM

(30) Priority: 29.03.1995 US 412633; 05.01.1996 US 583371
(43) Date of publication of application: 09.09.1998
(73) Proprietor: Equistar Chemicals, LP, Houston, TX 77010 (US)
(72) Inventor: WINSLOW, Linda, N., Cincinnati, OH 45236 (US); KLENDWORTH, Douglas, D., West Chester, OH 45069 (US); MENON, Raghu, West Chester, OH 45069 (US); LYNCH, Michael, W., West Chester, OH 45069 (US); FIELDS, Garry, L., Seneca, IL 61360 (US); JOHNSON, Kenneth, W., Naperville, IL 60565 (US)
(74) Representative: Schmidt-Evers, Jürgen, Dipl.-Ing.
(86) International application number: PCT/US96/04367
(87) International publication number: WO 96/031274

(56) References cited:
- EP-A- 0 055 589
- EP-A- 0 197 689
- BE-A- 857 100
- JP-A- 4 180 837
- US-A- 4 004 071
- US-A- 4 402 861
- US-A- 4 657 997
- US-A- 4 918 038
- US-A- 5 334 567

## Description

The present invention is directed to a vanadium-containing catalyst system useful in the polymerization of olefins. More particularly, the present invention is directed to a vanadium-containing catalyst system particularly adapted to the formation of olefin polymers used in the fabrication of blow molded articles, films, cable wrap and the like.

The use of olefin polymers in fabricated articles is well established in the art. Olefin polymers combine relative low cost with chemical inertness. As such, they are particularly suitable for use as containers, films and insulating wrappings of electrical conduits such as wire and cable. Containers formed of olefin polymers, as those skilled in the art are aware, are usually prepared by blow molding techniques. Blow molded polyolefin bottles are often employed as inert containers for liquids whose properties but for the inertness of the polyolefin container would be affected by the material of construction of the container. As a result, foods, soaps, detergents and the like, which cannot be affected by the material of construction of the container, are oftentimes vended in polyolefin containers. Obviously, breakage, a problem associated with the use of glass, is not a concern when containers are fabricated of polyolefins.

Similarly, cable and wire insulating wrap is usually formed of an olefin polymer. This use is based upon the electrical insulating properties and flexibility of olefin polymers.

Olefin polymeric film is employed for many of the same reasons that prompt the use of olefin polymer in container and wire wrap applications. That is, chemical inertness and flexibility urge those involved in film forming operations to employ olefin polymers in this application.

Those skilled in the art are particularly aware of the preferred suitability, among other olefin polymers, of ethylene polymers in the formation of containers, films and wire wrap. Ethylene polymers, either homopolymers or copolymers wherein the comonomer is a higher α-olefin, such as butene or hexene, in a low concentration, having a preferred density in the range of between about 0.94 and about 0.97, are particularly suitable, because of their low cost, chemical inertness and non-brittleness, for use as milk bottles, detergent bottles, food wrappings, cable wrappings and the like.

Those skilled in the these arts are aware of the essential combination of processing and property characteristics required to successfully prepare these fabricated articles. Indeed, the continuing development of new olefin polymers, especially ethylene polymers, has focused upon the development of resins having both processing and article physical properties required in high volume production of cable wrap, film, high quality containers and other blow molded articles.

Although the criteria for acceptable plastic containers and bottles are well established in the art, the criteria for acceptability of olefin polymers in terms of its processability varies with the equipment employed. Two classes of blow molding apparatus are utilized in the formation of blow molded polymeric articles. The first of these classes is continuous blow molding apparatus. Suffice it to say, the processing speed of this type of blow molding apparatus is inversely proportional to the viscosity of the molten polymer processed therein. A commonly employed measure of the suitability of a resin for continuous blow molding operations is the property known as η*₁₀₀. η*₁₀₀ measures the viscosity, in poise, of a polymeric resin rotated at 100 reciprocal seconds. The lower the viscosity of a polymer, the easier and more efficient is its processability during blow molding fabrication, on continuous blow molding apparatus, into blow molded articles.

The processability properties of a plastic resin fabricated into blow molded articles are more complex than its product properties. This is because of the common utilization of a second class of blow molding apparatus in the formation of blow molded articles. In addition to continuous blow molding equipment, this second class of blow molding apparatus utilizes intermittent reciprocal screws. This noncontinuous apparatus, although dependent upon polymer viscosity, is more critically dependent upon another polymer rheological property, zero land die swell.

Three physical properties which mark a good blow molded article are environmental stress crack resistance (ESCR), top load ESCR and column crush. For a polymer to be successfully employed in blow molded article applications these properties must be sufficiently high to insure requisite bottle leak proofness and strength.

An additional advantage of catalyst systems which produce superior quality resins relates to the increasing practice in this art of blending recycled polymer with virgin polymer. As those skilled in the art are aware, recycled polymer possesses inherently inferior physical properties compared to virgin polymer. This results in a blend of virgin and recycled polymer having inferior properties compared to virgin polymer alone. Therefore, the blending, with a recycled polymer, of a virgin polymer having the enhanced properties produced by an improved catalyst system provides a resin composition which, when molded, produce molded articles having improved properties compared to those blended from recycled polymer and the virgin polymers of the prior art.

To meet these requirements the vast majority of olefin polymers destined for processing on blow molding apparatus are presently synthesized into high density polyethylene (HDPE) using silica supported chromium catalyst systems. Such systems produce HDPE's having broad molecular weight distributions.

Chromium-based catalyst systems, commonly employed to prepare ethylene polymers used in the manufacture of blow molded articles, especially bottles and the like, suffer from a major failing complicating the polymer-forming reaction. That is, chromium-based catalysts are very sensitive to polymerization upset caused by even very minor ethylene feedstock contamination. This is especially critical in that even minute concentrations of oxygen or moisture disrupt the process of polymerizing ethylene polymers when catalyzed by chromium-based catalysts, which, as stated above, is the standard prior art catalyst used in the polymerization of blow moldable grades of ethylene polymers.

Traditional Ziegler-Natta catalyst systems, based on the use of the single transition metal titanium, provide excellent control of the molecular weight of product olefin polymer albeit they do not adequately control molecular weight distribution. Thus, although traditional titanium-containing catalyst systems have been employed in this application, they have been used in costly multiple reactor polymerization. Such reaction schemes overcome the molecular weight distribution problem but at no small cost.

Multiple reactor polymerization provides reduced production rates, increased process complexity, significant gelling, which gelling results from the immiscibility of the resin product of a first reactor with the resin product of a second reactor in the liquid state, increased capital expense and increased operating costs.

More recently, dual-site or multi-site Ziegler-Natta catalyst systems, which meet the twin requirements of absolute molecular weight and molecular weight distribution, have been developed to provide requisite polymer product and processability physical properties.

One such development is set forth in U.S. Patent No. 4,918,038 to Samuels et al. which describes a catalyst system which comprises a vanadium-containing component. The vanadium-containing component is the reaction product of a vanadium halide and a boron trihalide or an aluminum halide which may include up to two alkyl groups. The four-component catalyst system of the '038 patent includes, as a second component, a zirconium-magnesium halogen-containing complex or a vanadium oxy compound.

Other developments pertinent to the subject of the instant invention include U.S. Patent No. 4,004,071 to Aishima et al. which describes a method of homopolymerizing ethylene or copolymerizing ethylene and another olefin wherein the catalyst utilized is the reaction product of a hydrocarbon-soluble complex containing aluminum and magnesium and at least one compound selected from the group consisting of titanium and vanadium compounds which contain at least one halogen atom. These catalyst systems include a trialkyl aluminum or dialkylaluminum hydride cocatalyst.

U.S. Patent No. 4,378,304 to Dombro describes a catalyst component, which, in conjunction with a cocatalyst and hydrogen, polymerizes ethylene. This catalyst is the sequential reaction product of (1) a porous support of a Group IIA organometallic compound; (2) water or a hydrocarbyl alcohol; and (3) a Group IVB and/or Group VB transition metal compound. The cocatalyst utilized with the catalyst component is a Group IA, IIA, IIIA and/or IIB organometallic compound. It is emphasized that the preferred transition metal compound of the catalyst component is a titanium-containing compound.

U.S. Patent No. 4,402,861 to Hoff describes an olefin polymerization catalyst which includes a solid catalyst component formed by reacting, in the presence of a solvent, any one of silica, alumina and silica-alumina, preheated to between 200°C and 900°C, with an alcohol and a magnesium alkyl or a magnesium-aluminum complex. The sequence of reaction of the alcohol and the organomagnesium compound is optional. That is, either the alcohol or the organomagnesium compound can contact the solid inorganic oxide first followed by contact with the second of the two compounds. Finally, the resultant product is contacted with a titanium, vanadium or zirconium halide, oxyhalide or alkoxyhalide.

U.S. Patent No. 4,426,317 to Rogers describes a catalyst composition useful in the polymerization of olefins wherein an inorganic oxide, predried to remove adsorbed water, is reacted with an organometallic compound of a Group III metal, preferably a trialkylaluminum compound. That product, in turn, is contacted with a vanadium compound wherein the vanadium has a valence of at least +3.

U.S. Patent Nos. 4,434,242 to Roling et al. and 4,435,518 to Pennington describe similar olefin polymerization catalyst compositions. Both of these catalyst compositions are obtained by drying an inorganic oxide having surface hydroxyl groups to remove adsorbed water. The so-treated oxide is contacted with an organometallic compound having at least one alkyl group attached to a Group III metal. This organometallic compound is preferably a trialkylaluminum. The thus-treated product is contacted with a vanadium halide and finally contacted with, in the case of the '242 patent, an ether-alcohol and, in the case of the '518 patent, an alcohol.

U.S. Patent No. 4,435,520 to Aylward describes a catalyst composition similar to the aforementioned U.S. Patent Nos. 4,434,242 and 4,435,518 but for the omission of the final alcohol or ether-alcohol contacting step. However, this patent requires that the vanadium halide be a mixture of vanadyl chloride and vanadium tetrachloride.

U.S. Patent No. 5,334,567 to Menon et al. teaches an α-olefin polymerization catalyst system. The system includes a solid catalyst component formed by admixing a solid inorganic oxide, a Group III organometallic compound, a vanadium-containing compound and an organic reagent which may be an alcohol, an ether, a carbonate, an amine, a phosphorus compound or a dialcohol. The catalyst system includes a halosilane cocatalyst and may include a modifying compound having the formula M(R⁴)_{d}X_{3-d} where M is aluminum or boron; X³ is halogen; R⁴ is saturated hydrocarbon having 1 to 12 carbon atoms; and d is 0 or an integer of 1 to 3.

In addition to the above patents, U.S. Patent No. 4,892,853 to Cann et al., describes a vanadium catalyst system which includes a vanadium-containing catalyst component. That component is the reaction product of a vanadium halide or a vanadium acetylacetonate and an electron donor which is a liquid, organic Lewis base. That base may be an ester, a ketone, an amine, an alcohol, an ether or mixtures thereof. The catalyst composition of the '853 patent includes a hydrocarbyl aluminum cocatalyst and a halocarbon promoter.

US 5,334,567 discloses a catalyst system for polymerizing α-olefins which is prepared by pretreating a silica support, slurrying the pretreated silica and contacting said slurried silica with a vanadium-containing compound.

Although the above discussion of the prior art barely skims the surface of catalyst systems employed in the synthesis of blow molding resins, it is apparent that the catalyst systems of these and other disclosures, employed to produce an olefinic, especially ethylenic, polymer having the required combination of product and process characteristics necessary for the successful production of blow molded articles, especially bottles and other containers of liquid foods, detergents and the like, films and cable wrap, can be improved to provide properties better suited to these applications.

A new catalyst system has now been developed which is useful in the polymerization of olefins, especially ethylene polymers, particularly suited for use in blow molding, film and cable wrap applications. These polymers combine process and product properties uniquely suited for use as bottles, film, cable wrap, containers and the like. That is, this catalyst system produces polymers characterized by rheological properties which permit rapid formation into films, cable wraps and blow molded articles such as bottles, containers and the like, which themselves have sufficiently high strength, flexibility and leakproof properties insuring their suitability for use as films, cable wraps and containers for foodstuffs, soaps, detergents and the like. This new catalyst system, moreover, better tolerates minor concentrations of impurities, such as air, oxygen or moisture, without polymerization reaction upset. In addition, the olefin polymer produced by the catalyst system of this invention is characterized by good hydrogen sensitivity, low oligomer concentration, low concentration of fines and high bulk density.

In accordance with the present invention a catalyst system is provided.

The catalyst system, useful in the polymerization of olefins, is specified in claim 1 or claim 31.

Preferred embodiments are specified in claims 2-30 or claims 32-59, respectively.

The catalyst system of the present invention includes a solid catalyst component supported on silica. The silica support provides optimum results if the silica particles have an average particle size in the range of 30 to 600 microns. More preferably, the particle size of the silica is 30 to 100 microns. The silica is further preferably characterized by a surface area of 50 to 1000 square meters per gram, more preferably, 100 to 400 square meters per gram. The silica is also defined, in a preferred embodiment, by a pore volume of 0.5 to 3.5 cm³ [cc] per gram, more preferably, 0.5 to about 2 cm³ [cc] per gram.

The silica having the above-preferred characteristics is thereupon preheated to remove water that may be adsorbed on its surface. The preheating step involves heating the silica particles to a temperature in the range of between 150°C to 800°C. Preferably, the silica is preheated to a temperature in the range of between 150°C to 400°C. More preferably, the silica is preheated to a temperature in the range of between 200°C and 300°C.

Alternatively, the silica having the above-noted characteristics is pre-treated by contacting the silica with a hexaalkyldisilazane under ambient conditions. It is theorized that the improved results observed after contact with this compound is due to the reaction of the disilazane compound with hydroxyl groups on the surface of the silica particles. In a preferred embodiment, the hexaalkyldisilazane employed is hexamethyldisilazane (HMDS).

In a preferred embodiment the thus contacted silica particles are subjected to drying, to remove any water present, by heating the particles at a temperature in the range of between 100°C and 200°C for 4 to 12 hours. More preferably, this optional but preferred heating step is conducted at a temperature in the range of between 125°C and 175°C.

The thus preheated or contacted silica is thereupon contacted with two contacting agents. The first of the two contacting agents is a compound or complex including at least one carbon to magnesium covalent bond. The second contacting agent is a compound which includes at least one covalent bond between a carbon atom an atom of a metal of Group III of the Periodic Table of Elements. Although the above recital speaks of first and second contacting agents, the actual contact of the preheated or pretreated silica with the two agents is random. That is, this contact with the first and second contacting agents can occur simultaneously or in either order. For example, the preheated silica, or the silica contacted with hexalkyldisilazane, can first contact the compound or complex which includes at least one carbon to magnesium covalent bond or the compound which contains at least one carbon to Group III metal covalent bond. The second contacting step, however, is required to be contact between the product of the first contacting step and the agent which was not elected for contact in the first contacting step. Thus, if the first step involves contact with the magnesium-containing compound then the following step is contact with the Group III metal-containing compound and vice versa. Alternatively, the preheated silica, or the disilazane-contacted silica, can simultaneously be contacted with a compound or complex which includes at least one carbon to magnesium covalent bond and a compound which includes one carbon to Group III metal covalent bond.

It is important to appreciate that although these two contacting steps occur in either order, insofar as either contacting step may occur first, the polymeric product produced by polymerizing at least one olefin with the resultant solid catalyst component results in the formation of polymers having different rheological properties. These differences are important in blow molding, film forming or cable wrap forming processing of the resultant resin. It should be further appreciated, however, that, although polymer processing characteristics are observed as a result of this sequencing, variation of the polymer product properties are independent of such sequencing variation, i.e. they are substantially alike.

The first contacting step between the silica and the magnesium- or the Group III metal-containing compounds and the second contacting step between the product of the first contacting step and the magnesium-containing or the Group III metal-containing compound are preferably conducted in the presence of an inert hydrocarbon liquid under ambient conditions. Of the aliphatic and aromatic hydrocarbons that may be used as the inert liquid, alkanes are preferred. Any alkane which is liquid under ambient conditions may be utilized. Thus, C₄-C₁₀ alkanes are preferred. More preferably, a C₅-C₈ alkane is utilized in this application. Most preferably, the inert hydrocarbon liquid is hexane or heptane.

It is emphasized that not only are the two aforementioned steps preferably conducted in an inert hydrocarbon solvent but the subsequent contacting steps, discussed below, preferably take place in an inert hydrocarbon liquid. In a preferred embodiment, the hydrocarbon liquid utilized in the first two contacting steps is preferably used in the latter steps as well. Thus, it is preferred that the inert hydrocarbon liquid that serves as the silica slurrying agent, serves also as the solvent for the contacting compounds discussed below.

Turning to a detailed discussion of the first two contacting steps, which occur in random order, one of these steps is contact with a compound or complex which includes at least one carbon to magnesium covalent bond. That compound or complex preferably has the structural formula

MgR₂·nAlR¹ ₃ (I)

where R is the same or different and is hydrocarbyl; R¹ is the same or different and is hydrocarbyl; and n is 0 to 1.

More preferably, the compound having the structural formula (I) is characterized by R being the same or different and being alkyl, alkenyl, aryl, aralkyl or alkaryl; and R¹ being the same or different and being alkyl, alkenyl, aryl, aralkyl or alkaryl.

Still more preferably, the magnesium-containing compound has the structural formula (I) where R is the same or different and is C₁-C₈ alkyl; R¹ is the same or different and is C₁-C₈ alkyl; and n is 0 to 0.7.

Even still more preferably, the compound having the structural formula (I) is characterized by R being the same and being n-butyl; R¹ being the same being ethyl; and n is 0 to 0.133. Most preferably, n is 0 or 0.133.

The compound which includes at least one carbon to Group III metal is preferably a compound where the Group III metal is aluminum. More preferably, this compound has the structural formula

AlR²R³R⁴ (II)

where R², R³ and R⁴ are the same or different and are hydrocarbyl. Still more preferably, R², R³ and R⁴ of compound (II) are the same or different and are alkyl. Even still more preferably, R², R³ and R⁴ of compound (II) are the same or different and are C₂-C₆ alkyl. Most preferably, the compound having the structural formula (II) is triethylaluminum.

In the catalyst system of the present invention where the silica is initially treated with a hexaalkyldisilazane, and upon completion of the magnesium and the Group III metal containing compounds contacting steps, the thus formed solid product is washed. The washing step, in a preferred embodiment, involves contacting the solid product of the contact of the magnesium and Group III metal-contacting compounds with the hexaalkyldisilazane contacted silica in an inert hydrocarbon liquid. The solid in the thus formed slurry is thereupon again separated from the hydrocarbon liquid and the washed solid contacted with a fresh supply of the same inert hydrocarbon to produce a new slurry.

In a particularly preferred embodiment of the washing step the inert hydrocarbon liquid used as the slurrying agent in the preferred embodiment wherein the magnesium and Group III metal-containing compounds contact the silica support in an inert hydrocarbon liquid is employed as the washing medium. Thus, in a preferred embodiment, the inert hydrocarbon liquid used in the washing step is an alkane. Even more preferred, the inert hydrocarbon liquid washing agent is a C₄ to C₁₀ alkane. Still even more preferably, the liquid washing agent is a C₅ to C₈ alkane. Most preferably, the inert hydrocarbon liquid washing agent is hexane or heptane.

In that the essential washing step occurs after completion of both the magnesium-containing compound and the Group III metal-containing compound contacting steps, this step occurs after the Group III metal-containing contacting step in the preferred embodiment wherein this step occurs subsequent to the magnesium-containing compound contacting step. Similarly, this essential washing step occurs after the magnesium-containing contacting step when this step occurs after the Group III metal-containing compound contacting step. Finally, in the third embodiment, wherein the magnesium-containing compound and the Group III metal-containing contacting steps occur simultaneously, the essential washing step occurs subsequent to that step.

It is to be appreciated that additional washing steps may be conducted although such washing steps are not essential. If additional washing steps are conducted, they are conducted in accordance with the procedure described above in the discussion of the essential washing step. If additional washing steps are conducted, they are conducted between contacting steps.

In one preferred embodiment, two washing steps are employed. In this embodiment the first of the two washing steps occur after the completion of both the Group III metal-containing compound and the magnesium-containing compound. The second washing step occurs after the vanadium-containing compound contacting step.

In yet another preferred embodiment of the catalyst system, the solid catalyst component is prepared in a process which includes three washing steps. In this embodiment, all washing steps are identically conducted and comprise the procedure discussed above in the description of the essential washing step. In this embodiment, a washing step occurs after the magnesium-containing compound, the Group III metal-containing compound and the vanadium-containing compound. Moreover, this embodiment is obviously outside the scope of the preferred embodiment wherein the magnesium-containing compound and the Group III metal-containing compound contacting steps occur simultaneously.

In both the catalyst system of the present invention which involves the pre-heating of the silica and the system which involves the pre-treatment with a hexaalkyldisilazane, the next contacting step, and the next overall step in the formation of the supported catalyst component of the catalyst system of the present invention involves contact with a vanadium compound which includes at least one halogen atom. Preferably, the vanadium compound is selected from the group consisting of a compound having the structural formula

(R⁵O)ₚVOₘX₃₋ₚ (III)

where R⁵ is C₁-C₁₂ hydrocarbyl; X is halogen; m is 0 or 1 and p is 0, 1 or 2; and a compound having the structural formula

(R⁵O)_{q}VX_{4-q} (IV)

where q is 0, 1, 2 or 3; and R⁵ and X have the meanings given above.

More preferably, the compounds having the structural formulae (III)-(V) are characterized by p, q and r being 0; and X being chlorine or bromine. Thus, such compounds as VOCl₃, VOBr₃, VCl₄, VBr₄, VCl₃ and VBr₃ are more preferred for use in the formation of the solid catalyst component of the present invention. Most preferably, the vanadium compound is VOCl₃, VCl₄ or VCl₃.

The final contacting agent in the formation of the solid catalyst component of the catalyst system of this invention is an alcohol. Preferably, the alcohol utilized in the formation of the solid catalyst component has the structural formula

R⁶OH (V)

where R⁶ is C₁-C₁₂ hydrocarbyl.

More preferably, the compound having the structural formula (V) is characterized by R⁶ being C₁-C₁₂ alkyl.

Still more preferably, structural formula (V) is defined by R⁶ being C₁-C₈ alkyl.

Even still more preferably, R⁶ in structural formula (V) is C₂-C₆ alkyl.

Most preferably, the alcohol having the structural formula (V) is n-butanol.

As stated above, the contacting steps preferably occur in an inert hydrocarbon solvent. Thus, in a preferred embodiment, a slurry is initially formed of preheated silica or hexaalkyldisilazane contacted silica by disposing particles thereof in an inert liquid hydrocarbon. The remaining contacting agents are thereupon added thereto. In preferred embodiments, the added contacting compounds are themselves dissolved in an inert hydrocarbon liquid solvent. Even more preferably, the solvent used to slurry the silica is identical to the solvent used to form solutions of the contacting compounds introduced therein.

It is preferable that the contacting agents be present in fixed concentrations in order to produce a more effective catalyst component. To that end each contacting agent employed in the formation of the supported catalyst component is preferably present in a concentration range based on a fixed amount of the dried, solvent-free support. Thus, the compound or complex which includes at least one magnesium to carbon covalent bond is preferably present such that its concentration is in the range of between 0.1 millimole and 2.0 millimoles of magnesium per gram of silica. More preferably, the magnesium-containing compound or complex contacts silica such that the concentration of the magnesium-containing compound or complex provides 0.15 millimole to 1.4 millimoles of magnesium per gram of silica. Still more preferably, the concentration of the magnesium-containing compound or complex provides 0.2 millimole to 1.0 millimole of magnesium per gram of silica.

The Group III metal-containing organic compound is preferably provided in a concentration, in the formation of the solid catalyst component, such that between 0.1 millimole to 2.0 millimoles of the Group III metal contacts 1 gram of the silica particles which constitute the support. More preferably, the concentration of the Group III metal in the Group III metal-containing compound is in the range of between 0.15 millimole and 1.4 millimoles per gram of silica. Still more preferably, the concentration of the Group III metal in the Group III metal-containing compound is in the range of between 0.2 millimole and 1.0 millimole per gram of silica.

The vanadium compound whose inclusion characterizes the solid catalyst component is preferably employed in an amount such that the vanadium concentration is between 0.2 millimole and 1.4 millimoles per gram of silica. More preferably, the vanadium concentration in the vanadium-containing compound is in the range of between 0.4 millimole and 1.2 millimoles per gram of silica. Still more preferably, the concentration of the vanadium-containing compound, as measured by the vanadium concentration is between 0.6 millimole and 0.9 millimole of vanadium per gram of silica.

The final contacting agent, an alcohol, is preferably present in the concentration such that there are between 0.01 millimole and 2.0 millimoles of the alcoholic contacting agent per gram of silica. More preferably, the alcohol is present in an amount in the range of between 0.1 millimole and 1.0 millimole per gram of silica. Still more preferably, the alcohol compound concentration is between 0.1 millimole and 0.5 millimole per gram of silica.

It is preferred that the vanadium compound be present relative to the alcoholic compound such that the molar ratio of alcohol to vanadium compound is no more than 1. More preferably, the molar ratio of the alcoholic compound to the vanadium compound, employed in the formation of the solid catalyst component, is in the range of between 0.05:1 and 1:1. Still more preferably, the molar ratio of the alcoholic compound to the vanadium compound is in the range of between 0.1:1 and 0.6:1. Even more preferably, this molar ratio is in the range of between 0.2:1 and 0.3:1.

The catalyst system of the present invention includes, as a second catalyst component, an organoaluminum compound cocatalyst. Preferably, the cocatalyst organoaluminum compound has the structural formula

AlR⁷ ᵣX¹ ₃₋ᵣ (VI)

where R⁷ is the same or different and is hydrocarbyl; X¹ is halogen; and r is an integer of 1 to 3. More preferably, R⁷ is C₁-C₈ hydrocarbyl; and X¹ is chlorine or bromine. Still more preferably, the aluminum compound having the structural formula (VI) is characterized by R⁷ being the same or different and being C₁-C₈ alkyl; and r being 3. Even more preferably, the organoaluminum compound having the structural formula (VI) is characterized by R⁷ being the same and being C₁-C₄ alkyl.

The third catalyst component in the catalyst system of the present invention is a halogen-containing promoter. That promoter is preferably characterized by the structural formula

MₜHₛX² ₂ₜ₊₂₋ₛ (VIII)

where M is carbon, silicon, germanium or tin; X² is the same or different and is halogen; t is an integer of 1 to 5; and s is 0 or an integer of 1 to 11.

More preferably, the halogen-containing compound promoter having the structural formula (VII) is a halocarbon where M is carbon; X² is the same or different and is fluorine, chlorine or bromine; t is an integer of 1 to 3; and s is 0 or an integer of 1 to 7.

Preferred halocarbon compounds, used as promoters in the catalyst system of the present invention, include carbon tetrachloride, carbon tetrabromide, dichloromethane, dibromomethane, trichloromethane (chloroform), tribromomethane, 1,1,1-trichloroethane, 2,2-difluorotetrachloroethane, 1-dichlorofluoro-3-difluorochloropropane (Freon 113), methyl bromide, 1,1-dichloro-2,2,2-trifluoroethane, dichlorofluoromethane, trichlorofluoromethane and heptachloropropane.

The organoaluminum compound cocatalyst is preferably present such that the molar ratio of aluminum in the organoaluminum compound cocatalyst to vanadium in the solid, first catalyst component is in the range of between 10:1 and 100:1. More preferably, this molar ratio is in the range of between 15:1 and 80:1. Still more preferably, the ratio of aluminum in the second catalyst component to vanadium in the first catalyst component encompasses a molar ratio of-between 20:1 and 60:1. Even still more preferably, this molar ratio is in the range of between 30:1 and 50:1. Most preferably, the molar ratio of aluminum in the second catalyst component to vanadium in the first catalyst component is 40:1.

The concentration of the halocarbon promoter, the third catalyst component of the catalyst system of this invention, is preferably such that the molar ratio of aluminum in the cocatalyst component to the halogen-containing promoter compound is in the range of between 0.05:1 and 20.0:1. More preferably, this molar ratio is in the range of between 0.2:1 and 5.0:1. Still more preferably, the molar ratio of aluminum in the organoaluminum cocatalyst to the halogen-containing promoter compound is in the range of between 0.50:1 and 2.0:1. Most preferably, this molar ratio is 1:1.

The olefin or olefins, which, in a preferred embodiment, comprise ethylene, polymerized utilizing the catalyst system of the present invention, provide polymers well suited for processing into films, cable wrap and blow molded articles. In particular, the olefin polymers produced utilizing the catalyst system of the present invention are characterized not only by physical properties well suited for use as these fabricated articles but, in addition, by physical properties suitable for processing of these polymers during the fabrication of these articles, such as improvements in well established rheological properties of polymeric materials.

One such rheological property is a measure of polymer elasticity response, denoted as ER. ER, which is unitless, provides a guide to the polymer's processability in the molten state. This response which is a complex rheological phenomenon provides those skilled in the art with a guideline in employing the polymer in the fabrication of various plastic shaped articles. For example, an ER in the excess of 7.0 is undesirable processability-wise in the formation of fabricated articles. An ER below 5.0 is desirable in the formation of plastic films. On the other hand, the formation of blow molded articles, such as bottles, containers and the like, suggests the use of a polymer having an ER of no more than 7.0.

Determination of ER requires frequency response data in the linear viscoelastic region. That is, ER is derived from the measured dynamic storage modulus, G', and loss modulus, G'', as a function of frequency. Generally speaking, G' is a measure of energy stored and recovered per cycle of sinusoidal deformation; G'' is a measure of energy dissipated or lost as heat per cycle. In one method, G' versus G'' is plotted in logarithmic coordinates resulting in a curve that is dependent upon MWD and/or LCB and is practically independent of temperature and molecular weight. Curves of this sort are generally known as Modified Cole-Cole Plots as described, for example, by E.R. Harrel et al. in Journal of Applied Polymer Science, Vol. 29, pp. 995-1010 (1984); C.D. Han et al. in Polymer Engineering Reviews, Vol. 2, No. 2, pp. 135-165 (1982); and N. Nakajima et al. "Modified Cole-Cole Plot as a Tool for Rheological Analysis of Polymers" in "Current Topics in Polymer Science", Vol. II, Ottenbrite et al., Eds., Hanser Publishers (1987). The contents of all of which are incorporated herein by reference, including ASTM D 4440 entitled "Standard Practice for Rheological Measurement of Polymer Melts Using Dynamic Mechanical Properties".

Polydispersity at the high molecular weight end is reflected as higher G' values. Procedurally, any rheometer capable of measuring dynamic mechanical properties of polymer melts over a wide range of frequencies can be used, such as Rheometrics Mechanical Spectrometer Model 605 or 705 or Rheometrics Dynamic Analyzer RDA2, all of which utilize discreet frequencies to cover the wide range.

As will be appreciated by those of skill in the art, if the plot of 1nG' versus 1nG'' is even slightly nonlinear, the resulting ER may be unreliable; an indication of this is if the correlation coefficient of the first order lnG' versus 1nG'' fit is less than 0.999. Mathematically, ER can be computed by fitting 1nG' versus 1nG'' for the nine lowest frequency points to a linear equation and extrapolating it to calculate G' at G'' = 5 x 10³ dynes/cm². ER is then calculated from the equation:${\text{ER=(1.781 x 10}}^{\text{-3}} {\text{)G' at a value of G''= 5 x 10}}^{\text{3}} {\text{dynes/cm}}^{\text{2}}$

Another rheological property of importance is η*₁₀₀. This property is a measure of viscosity in poise, determined while the molten polymer is subjected to a shear force provided by rotating the polymer at a speed of 100 radians per second in a dynamic oscillatory rheometer. This test is fully defined in ASTM Standard Test Procedures D4092 and D4440.

In addition to the above discussed rheological properties, important in defining a polymer's processability on blow molding apparatus, there are at least three important blow molded plastic article properties which characterize the suitability of the polymer as the material of construction of such an article.

The first of these properties is bottle environmental stress crack resistance (bottle ESCR), measured in days. This property is determined in a test that involves filling at least 30 standard 16 oz. cylindrical blow molded bottles formed of the resin under test with a 10% solution of a standard detergent in distilled or demineralized water. This solution includes a minute amount of a dye indicator. The capped bottles are placed in an oven maintained at a temperature of 63°C to 66°C. The test is continued until all the bottles fail or 21 days pass, whichever occurs first. Any bottle that does not fail after 21 days in the oven is reported as >21 days. The failure of each bottle during the test, as manifested by leakage of the solution through the wall of the bottle, is reported as the number of days to failure. Using standard statistical methods the 50% failure point is determined. That is, bottle ESCR reports F50, the estimated time required for 50% of the containers to fail.

The second of these properties is top load environment stress crack resistance (top load ESCR) measured in hours. This property is described and defined in The Plastic Bottle Institute Technical Bulletin PBI 11 incorporated herein by reference.

The third important plastic blow molded article property is column crush. This property, reported in pounds, is fully defined in ASTM Standard Test Procedure D-2659 incorporated herein by reference.

The following examples are provided to illustrate the scope of the present invention. Because these examples are given for illustrative purposes only, the present invention should not be limited thereto.

### Non-inventive EXAMPLE 1

### Preparation of a Vanadium-Containing Solid Catalyst Component

Silica (2.0 g) (Davison Chemical Company Grade 948 silica) was dried for 6 hours at 200°C in a dry nitrogen fluidized bed. Prior to further processing the silica was weighed in a three-neck flask, equipped with a nitrogen inlet, overhead stirrer shaft/blade and rubber septum. This operation, as were all further steps in the preparation of the solid catalyst, was conducted in a dry nitrogen atmosphere utilizing a Braun Labmaster [trademark] 130 glovebox. The silica in the flask was thereupon moved to a Schlenk line and processing was conducted under Schlenk techniques to ensure the exclusion of moisture and oxygen. A nitrogen line was attached and heptane (20 ml.) added to the flask to form a silica slurry. Thereupon a solution of 0.5 M (C₄H₉)₂Mg·0.133Al(C₂H₅)₃ in heptane (2.8 ml.) was added to the slurry. This solution was stirred with the silica slurry for 30 minutes at ambient temperature and pressure. Thereupon, 0.5 M triethylaluminum (TEAL) in heptane solution (2.9 ml.) was added to the slurry in the flask. Again, the thus formed mixture was stirred for 30 minutes at ambient temperature and pressure. Thereupon, a 0.53 M vanadium tetrachloride in heptane solution (3.0 ml.) was added. As before, the thus formed mixture was stirred for 30 minutes at ambient temperature and pressure. Finally, a 0.5 M solution of 1-butanol in heptane (0.9 ml.) was introduced into the flask. Again, the added solution was stirred for 30 minutes at ambient temperature and pressure. The solid catalyst component was recovered by heating the slurry under a nitrogen purge to remove the heptane solvent by evaporation.

### Non-inventive EXAMPLE 2

### Preparation of a Vanadium-Containing Solid Catalyst Component

Non-inventive Example 1 was identically reproduced but for the sequence of addition of the solution of 0.5 M (C₄H₉)₂Mg·0.133Al(C₂H₅)₃ in heptane and the 0.5 M solution of triethylaluminum in heptane. In this example, the introduction of these solutions, compared to that of non-inventive Example 1, was reversed. That is, the first compound added to the silica slurry was the 0.5 M solution of triethylaluminum followed by the addition of the solution containing the magnesium-containing compound. The synthesis and recovery of the solid catalyst component of this example was otherwise identically conducted in accordance with non-inventive Example 1.

### Non-inventive EXAMPLE 3

### Copolymerization of Ethylene and n-Hexene Using Catalyst Component of Example 1

Ethylene and n-hexene were continuously copolymerized in a carbon steel 333.12 l [88-gallon] reactor maintained at a temperature of 100°C and a pressure of 620 psig. The continuous operation was conducted in isobutane which filled the reactor. Conditions were such that 45,36 kg [100 pounds] of a copolymer of ethylene and n-hexene were produced per hour of operation.

The polymerization reactor was operated under conditions which produced an average catalyst residence time of between 1 and 1½ hours. During this operation, ethylene was continuously fed into the isobutane filled reactor such that it was present in a concentration of between 10 and 15 mole %, based on the number of moles of isobutane.present in the reactor. n-Hexene was continuously fed into the 88-gallon reactor such that its concentration in the isobutane was between 0.5 and 1.5 mole %. Hydrogen gas was likewise continuously fed into the reactor such that its concentration was in the range of 0.05 and 1.5 mole %, again based on the molar concentration of the isobutane.

The catalyst system included the solid catalyst component of non-inventive Example 1, present in a concentration such that the aforementioned rate of 45,36 kg [100 lbs.] of the ethylene-n-hexene copolymer was obtained.

Similarly, a cocatalyst, triethylaluminum, was utilized in a concentration sufficient to produce a copolymer productivity of 45,36 kg [100 lbs.] per hour. To obtain this rate the cocatalyst was present, during the duration of the run, in a concentration of between 300 and 1,000 ppm, based on the weight of the isobutane solvent.

Finally, a promoter, trichlorofluoromethane (Freon 11), was present in an amount sufficient to assure a copolymer productivity rate of 45,36 kg [100 lbs.]/hr. In fact, the concentration of Freon 11 required to obtain this productivity during the polymerization run ranged between 500 ppm and 1,500 ppm.

The copolymer produced in this polymerization reaction was tested to obtain physical properties pertinent to its use in blow molding applications. These results are summarized in Table 1.

### Non-inventive EXAMPLE 4

### Copolymerization of Ethylene and n-Hexene Using Catalyst Component of Example 2

Non-inventive Example 3 was identically reproduced but for the replacement of the solid catalyst component of Example 1 with the solid catalyst component of Example 2. In addition, the promoter of non-inventive Example 3, trichlorofluoromethane, was replaced with dibromomethane (DBM).

The physical properties, pertinent to its use as a blow molding resin, of the poly(ethylene-n-hexene) product of this example are tabulated in Table 1.

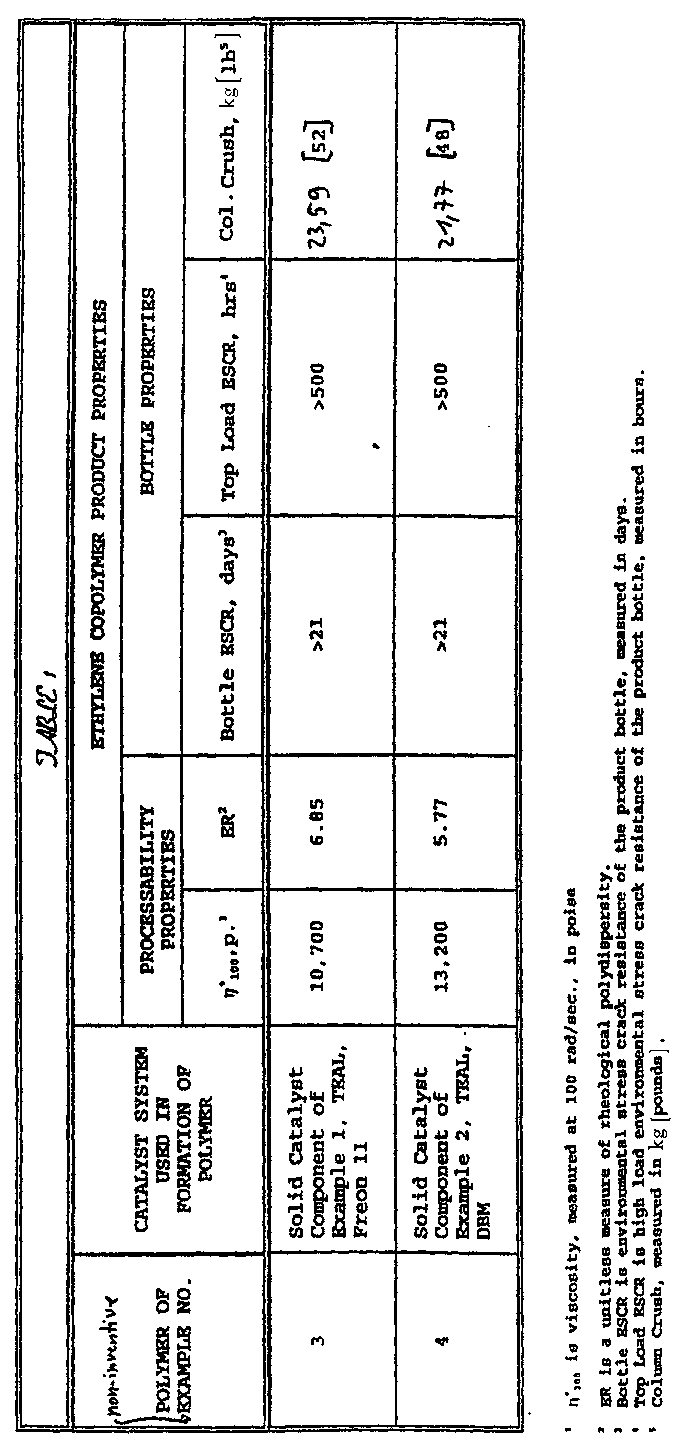

### ANALYSIS OF THE DATA IN TABLE 1

It is noted that the product properties for the ethylene polymer, bottle ESCR, top load ESCR and column crush, were substantially alike for both catalyst systems employing the solid catalyst component of non-inventive Examples 1 and 2. This data establishes that the product properties of polymers produced using both embodiments of the solid catalyst component of the catalyst system are outstanding compared to those prepared using the processes and catalysts used in the prior art in the formation of polymers employed in blow molding applications.

The processability properties are similarly outstanding. However, the methods utilized in the catalyst system of the present invention to produce the solid catalyst component thereof produce polymers that are better suited for utilization in either continuous blow molding apparatus or in reciprocating oscillating screw blow molded apparatus.

Continuous apparatus operate more efficiently using lower viscosity resins. η*₁₀₀ is an indicia of this property. η*₁₀₀ is a measure of viscosity in poise. Thus, the lower that number, the more processable is a resin blow molded on continuous blow molding machines. This is demonstrated by the polymer formed using the solid catalyst component of Example 1. That polymer demonstrates superior processability as manifested by its η*₁₀₀ of 10,700 poise. This viscosity is not only substantially lower than the polymer produced utilizing the solid catalyst component of Example 2 but is lower than other competing ethylene polymers designed for use in blow molding apparatus.

ER, the measure of polydispersity, is an important property in that it varies inversely with zero land die swell. Those skilled in the blow molding art are aware that the lower the polydispersity, the higher the zero land die swell and U_{D}, which is a measure of die swell employed on the commonly used Uniloy [trademark] blow molding machines. Those skilled in the art are further aware that the higher the zero land die swell, as well as the higher the U_{D} and the lower the ER, the better is the processability of the resin on the reciprocating oscillating blow molding apparatus.

### Non-inventive EXAMPLE 5

### Preparation of Silica Supported Catalyst Component

Silica of the same grade employed in non-inventive Example 1 and processed in accordance with the method used in that example was disposed in the same three-neck flask used therein and slurried in heptane (10 ml/g. of silica). The silica slurry was thereupon contacted with (C₂H₅) (C₄H₉)Mg·0.133 Al(C₂H₅)₃. (10.7 mmol/g. of silica). The components were permitted to react for 30 minutes at which time triethylaluminum (0.7 mmol/g. of silica) was added to the slurry. Again, 30 minutes were permitted to elapse at which time vanadium tetrachloride (0.8 mmol/g. of silica) was introduced into the slurry. Finally, after another 30 minutes, the slurry was contacted with n-butanol (0.2 mmol/g. of silica).

After allowing the reaction to continue for 30 minutes, the heptane solvent was driven off and the silica supported catalyst component product was analyzed. A summary of this analysis is included in Table 2.

### COMPARATIVE EXAMPLE 1

### Preparation of Silica Supported Catalyst Component Without Contact with an Aluminum-Containing Compound

A silica supported catalyst component was prepared in exact accordance with non-inventive Example 5 except for the omission of the step of contacting the slurry with triethylaluminum.

The catalyst component product of this example was analyzed and the results of that analysis are summarized in Table 2.

### COMPARATIVE EXAMPLE 2

### Preparation of Silica Supported Catalyst Component Without Contact with an Magnesium-Containing Compound

A silica supported catalyst component was prepared in exact accordance with non-inventive Example 5 except for the omission of the step wherein the slurry is contacted with the magnesium-aluminum complex.

The catalyst component product of this example was analyzed and the results of this analysis are summarized in Table 2.

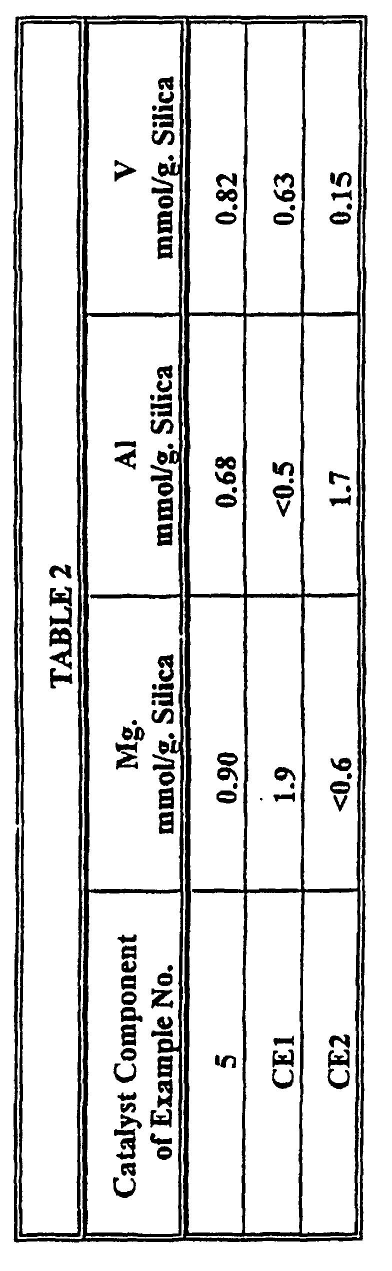

### Non-inventive EXAMPLE 6 AND COMPARATIVE EXAMPLES 3 AND 4

### Polymerization of Ethylene Using the Catalyst Component of non-inventive Example 5 and Comparative Examples 1 and 2

In non-inventive Example 6 ethylene was polymerized in a 1 liter, stainless steel reactor under a pressure of 31,03 bar [450 psig] and a temperature of 100°C.

The reactor was initially charged with 1.0 mL of a 1.0 M solution of triethylaluminum in heptane. This was followed by the introduction of hydrogen gas (40 mmol) and then isobutane (0.5 liter). Following the addition of the isobutane, ethylene was added to the reactor in an amount sufficient to bring its concentration to 12 mole % of the solution. The introduction of ethylene was followed by the addition of the solid'catalyst component (0.04 g) synthesized in Example 5. Finally, dibromomethane was added to the reactor in an amount of 1.0 mL of a 1.0 M solution in heptane. The polymerization reaction was conducted over a period of 1 hour.

In Comparative Example 3, non-inventive Example 6 was identically repeated but for the substitution of the same amount of the solid catalyst component of Comparative Example 1 for that of the solid catalyst component of non-inventive Example 5. Similarly, in Comparative Example 4, non-inventive Example 6 was identically repeated but for the substitution of the same amount of the solid catalyst component of Comparative Example 2 for that of the solid catalyst component of non-inventive Example 5.

The polyethylene products of these polymerizations were weighed and analyzed for high load melt index, elasticity response and vanadium residue concentration. These measurements are summarized in Table 3.

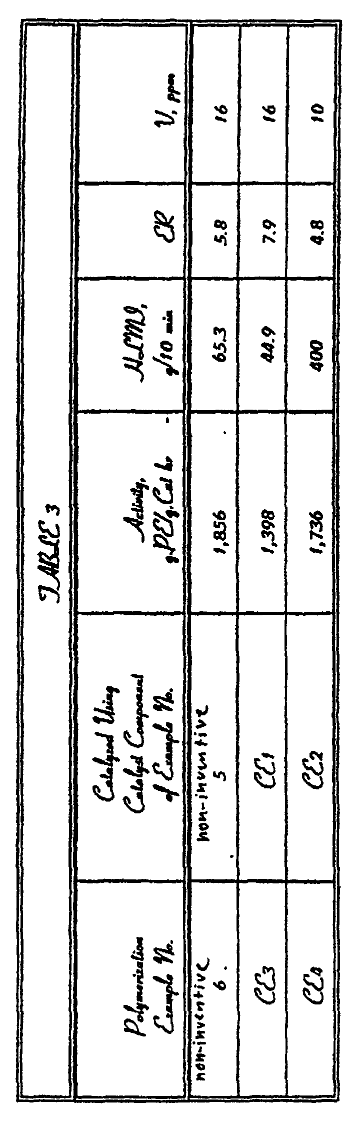

### ANALYSIS OF THE DATA IN TABLE 3

The results summarized in Table 3 emphasize the criticality of the inclusion of the magnesium-containing compound and the aluminum-containing compound contacting steps in the polymerization product . Whereas the polymerization reactions of non-inventive Example 6 and Comparative Examples 3 and 4 were identical, the differences noted therein had, of necessity, to be caused by the non-identical nature of the vanadium-containing catalyst component.

It is noted that the catalyst component evidencing the highest catalytic activity was the catalyst component of the non-inventive examples Moreover, the catalyst component of the non-inventive examples provided a melt index consistent with a high enough degree of polymerization and elasticity response to be easily processable in blow molding apparatus and to produce acceptably high blow molded article properties.

It should be appreciated that the polymer of Comparative Example 4, using the catalyst component of Comparative Example 2, had too high an HLMI, i.e. too low a degree of polymerization, for use in blow molding applications.

Finally, the elasticity response of the polymerization product of the catalyst component of non-inventive Example 6 produced a polymer well within the desired degree of elasticity response necessary for processing on blow molding apparatus to produce desirable containers, bottles and the like. The polymer of Comparative Example 3, using the catalyst component of Comparative Example 1, which included no aluminum-containing compound contacting step, had an ER in excess of 7, beyond the desirable range.

### COMPARATIVE EXAMPLE 5

### Preparation of a Vanadium-Containing Solid Catalyst Component

Silica (2.0 g) (Davison Chemical Company Grade 948) was dried for 6 hours at 200°C in a dry nitrogen fluidized bed. Prior to further processing the silica was disposed in a three-neck flask, equipped with a nitrogen inlet, overhead stirrer shaft/blade and rubber septum. This operation, as were all further steps in the preparation of the solid catalyst, was conducted in a dry nitrogen atmosphere utilizing a Braun Labmaster [trademark] 130 glovebox. The silica in the flask was thereupon moved to a Schlenk line and processing was conducted under Schlenk techniques to ensure the exclusion of moisture and oxygen. A nitrogen line was attached and heptane (20 ml.) added to the flask to form a silica slurry. Thereupon a solution of 0.5 M (C₄H₉)₂Mg·0.133Al(C₂H₅)₃ in heptane (2.8 ml.) was added to the slurry. This solution was stirred with the silica slurry for 30 minutes at ambient temperature and pressure. Thereupon, 0.5 M solution of triethylaluminum (TEAL) in heptane (2.8 ml.) was added to the slurry in the flask. Again, the thus formed mixture was stirred for 30 minutes at ambient temperature and pressure. Thereupon, a 0.53 M solution of vanadium tetrachloride in heptane (3.0 ml.) was added. As before, the thus formed mixture was stirred for 30 minutes at ambient temperature and pressure. Finally, a 0.5 M solution of n-butanol in heptane (0.8 ml.) was introduced into the flask. Again, the added solution was stirred for 30 minutes at ambient temperature and pressure. The solid catalyst component was recovered by heating the slurry under a nitrogen purge to remove the heptane solvent by evaporation.

A summary of the solid catalyst component of this example is included in Table 4

### COMPARATIVE EXAMPLE 6

### Preparation of a Vanadium-Containing Solid Catalyst Component

Comparative Example 5 was identically reproduced but for the processing of the silica support. Instead of heating the silica for 6 hours at 200°C, the silica was contacted, at room temperature, with HMDS, wherein the concentration of HMDS was in excess of that stoichiometrically required to insure complete reaction with hydroxyl groups on the surface of the silica. Upon completion of the HMDS contacting step, the HMDS contacted silica was dried in a nitrogen oven at 150°C. Thereupon the solid catalyst component was prepared in accordance with the procedure set forth in Comparative Example 5. That is, but for the substitution of HMDS contacted silica for the uncoated silica of Comparative Example 5 the two examples were identical.

This example is summarized in Table 4.

### COMPARATIVE EXAMPLE 7

### Polymerization of Ethylene Using Catalyst Component of Comparative Example 5

Ethylene was continuously polymerized in a stainless steel 2-liter reactor maintained at a temperature of 90°C and a pressure of 31,03 bar [450 psig]. The batch polymerization was conducted in isobutane (1 l.) which filled the reactor to half its capacity. The polymerization was conducted for 1 hour.

Initially, a 0.5 M solution of triethylaluminum (TEAL) in heptane (3.5 ml.) was charged into the reactor followed by isobutane (1 liter). Hydrogen gas (83 mmol).was then introduced followed by feeding therein of ethylene. The catalyst component (0.05 g) prepared in accordance with Comparative Example 5 was thereupon charged into the reactor. Finally, a 0.5 M solution of dibromomethane in heptane (3.5 ml.) was added. As stated above, the thus prepared polymerization reactant was allowed to polymerize for 1 hour. As also stated above, the thermodynamic conditions were 90°C and 31.03 bar [450 psig]. The intermittent addition of ethylene gas provided the 31,03 bar [450 psig] pressure maintained in the reactor. This addition resulted in an overall ethylene concentration in the ethylene polymerization reaction mixture of 15 mole %.

The ethylene homopolymer produced in this polymerization reaction was tested, in accordance with ASTM Standard Test Procedure D-1238, to determine its melt index.

A summary of the results of this example is included in Table 4.

### COMPARATIVE EXAMPLE 8

### Polymerization of Ethylene Using the Catalyst Component of Comparative Example 6

Comparative Example 7 was identically reproduced but for the replacement of the solid catalyst component of Comparative Example 5 with the solid catalyst component of Comparative Example 6.

The physical property measured in Comparative Example 7, i.e. melt index, of the polyethylene homopolymer was again determined.

The results of this example are tabulated in Table 4.

### COMPARATIVE EXAMPLE 9

### Polymerization of Ethylene Using the Catalyst Component of Comparative Example 5

Ethylene was continuously polymerized in a carbon steel 88-gallon reactor maintained at a temperature of 100°C and a pressure of 42,75 bar [620 psig]. The continuous polymerization was conducted in isobutane which filled the reactor.

The polymerization reactor was conducted under conditions which produced an average residence time of between 1 hour and 1½ hours. During the polymerization ethylene was continuously fed into the isobutane filled reactor such that the ethylene was present in a concentration of between 10 and 15 mole %, based on the number of moles of isobutane present in the reactor. Hydrogen gas was likewise continuously fed into the reactor such that its concentration was about 0.18 mole %, again based on the molar concentration of the isobutane.

The catalyst system included the catalyst compound of Comparative Example 5 present in a concentration such that about 45,36 kg [100 lbs.] of ethylene polymer were produced per hour of polymerization operation. The catalyst system also included a cocatalyst, triethylaluminum (TEAL), present in a concentration sufficient to produce the aforementioned polymer productivity of 45,36 kg [100 lbs.] per hour. To produce this rate the TEAL concentration ranged between 500 ppm and 1,500 ppm based on the weight of the isobutane solvent. Finally, the catalyst system included trichlorofluoromethane in a concentration which ranged from 500 ppm to 1500 ppm based on the weight of the isobutane solvent.

The polyethylene product of this example was measured to determine its melt index in accordance with the procedure employed in Comparative Example 7. In addition, the polymeric product was analyzed to determine its oligomeric concentration, as manifested by its concentration of molecules containing 8 to 18 carbon atoms as a percent of the total polymeric product. The oligomeric determination was obtained by standard gas chromatographic techniques in which an oligomeric solution, prepared by extracting the soluble component of the polymer produced in this example in a cyclohexane solvent, was analyzed.

The results of this example are summarized in Table 4.

### COMPARATIVE EXAMPLE 10

### Polymerization of Ethylene Using the Catalyst Component of Comparative Example 6

The ethylene polymerization of Comparative Example 9, was identically repeated but for the substitution of the catalyst component of Comparative Example 6 for the catalyst component of Comparative Example 5 employed in Comparative Example 9. In addition, the hydrogen gas concentration was decreased to 0.10 mole percent, again based on the total concentration of the reactants.

The polyethylene product of this example was analyzed to determine the physical properties, i.e. melt index and oligomeric concentration, reported in Comparative Example 9.

This example is summarized in Table 4.

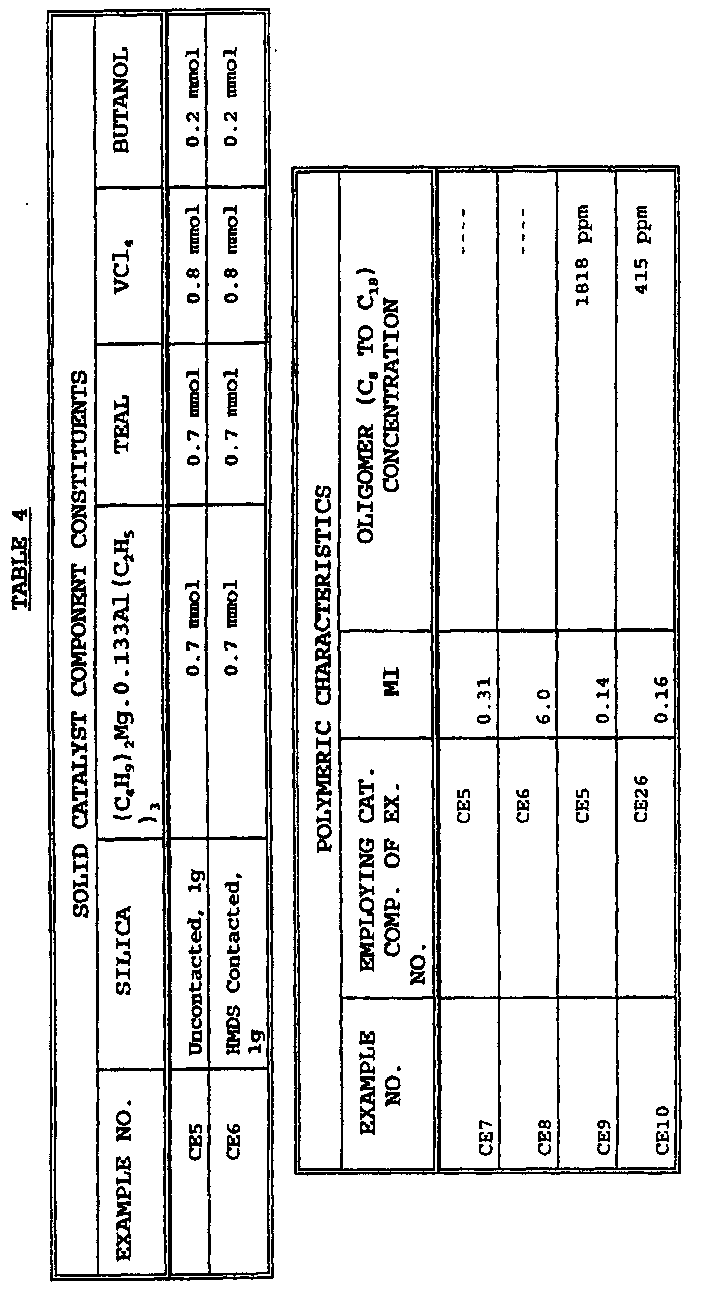

### ANALYSIS OF THE DATA IN TABLE 4

The data in Table 4 establishes that contact of the silica support with HMDS increases hydrogen sensitivity and reduces the level of residual oligomeric concentration. The higher melt index of the ethylene homopolymer produced in the polymerization of Comparative Example 8, which polymerization was catalyzed with the solid catalyst component of Comparative Example 6, compared to the melt index of the ethylene polymer produced in the polymerization of Comparative Example 7, which polymerization was catalyzed with the solid catalyst component of Comparative Example 5, establishes the greater hydrogen sensitivity of the catalyst component supported on HMDS-contacted silica compared to the uncontacted silica support.

Those skilled in the art are aware that a polymeric product manifestation of catalyst hydrogen sensitivity is its melt index. That is, a first ethylene polymer, produced at the same hydrogen concentration as a second ethylene polymer, will have a higher melt index than the second ethylene polymer if the catalyst component employed in the formation of the first ethylene polymer has a higher hydrogen sensitivity than the catalyst component employed in the formation of the second ethylene polymer.

The more than 75% reduction in oligomeric concentration in the polymeric product of Comparative Example 10, produced using the HMDS treated silica supported catalyst component, compared to the oligomeric concentration of the polymeric product of Comparative Example 9, produced using the uncoated silica supported catalyst component, establishes the superiority of an HMDS treated silica supported catalyst component in terms of reduced oligomeric generation.

Those skilled in the art are aware that oligomeric generation is a function of melt index. Thus, Comparative Examples 9 and 10 were specially designed, by appropriate adjustment of hydrogen concentration during polymerization, to produce polymeric products having substantially the same melt indices. Therefore, the oligomeric concentration of the polymeric products of these two examples establish the improved oligomeric propensity of a catalyst component produced using a HMDS treated silica support.

### Inventive EXAMPLE 7

### Preparation of Vanadium-Containing Solid Catalyst Component

The solid catalyst component of Comparative Example 6 was reproduced with the exceptions that the concentration of the TEAL used in this preparation was reduced to 0.3 mmol of Al per gram of silica from the 0.7 mmol of Al per gram of silica used in Comparative Example 2 and (2) there was a washing step subsequent to the completion of TEAL contacting step.

The washing step involved the separation of the solid contact product of HMDS treated silica, the magnesium complex and TEAL from the heptane slurrying agent. The separated solid was thereupon contacted with fresh heptane (20 ml). The solid was once again separated therefrom and thereupon reslurried in fresh heptane (20 ml). The heptane was once again removed by decantation from the solid and again reslurried in fresh heptane (20 ml). A solution of vanadium tetrachloride, prepared as in Comparative Example 5, was introduced into the slurry. Subsequently, the solid in the slurry was contacted with n-butanol, in accordance with the procedure of Comparative Example 5.

A summary of this example is included in Table 5.

### COMPARATIVE EXAMPLE 11

### Preparation of Vanadium-Containing Solid Catalyst Component

A vanadium-containing solid catalyst component was prepared in accordance with the procedure of inventive Example 7 except that the washing step, subsequent to the TEAL contacting step and prior to the VCl₄ contacting step, was omitted.

This example is tabulated in Table 5.

### Inventive EXAMPLE 8

### Preparation of Vanadium-Containing Solid Catalyst Component

A vanadium-containing solid catalyst component was prepared in accordance with the procedure set forth in Comparative Example 6 except that washing steps, each conducted in accordance with the procedure mentioned in inventive Example 7, were conducted subsequent to the magnesium complex contacting step, the TEAL contacting step, the VCl₄ contacting step and the n-butanol contacting step.

This example is included in Table 5.

### COMPARATIVE EXAMPLE 12

### Preparation of Vanadium-Containing Solid Catalyst Component

A vanadium-containing solid catalyst component was prepared in accordance with the procedure of Comparative Example 6. This component was thus identical to the solid catalyst component of Example 8 but for the absence of the four washing steps employed in that preparation.

Table 5 includes a summary of this example.

### Inventive EXAMPLE 9

### Preparation of Vanadium-Containing Solid Catalyst Component

The solid catalyst component of inventive Example 7 was identically reproduced but for minor changes in the concentrations of the initially charged magnesium-containing complex (C₄H₉)₂Mg.0.133Al(C₂H₅)₃ from 0.7 mmol to 0.5 mmol per gram of HMDS treated silica and the subsequently charged aluminum-containing compound TEAL from 0.3 mmol to 0.5 mmol per gram of HMDS treated silica.

This preparation is summarized in Table 5.

### Inventive EXAMPLE 10

### Preparation of Vanadium-Containing Solid Catalyst Component

The preparation of the solid catalyst component of inventive Example 9 was reproduced but for the reversal of the sequence of contact of the magnesium-containing complex and the aluminum-containing compound. That is, HMDS-contacted silica was contacted with the same concentration of TEAL and (C₄H₉)₂Mg.0.133Al(C₂H₅)₃, 0.5 mmol per gram of HMDS treated silica support. However, whereas the silica was contacted initially with the magnesium-containing complex followed, without washing, by contact with TEAL in inventive Example 8, in inventive Example 9 the HMDS-contacted silica was initially contacted with TEAL, followed, without washing, by contact with the magnesium-containing complex.

The above difference between the solid catalyst component of inventive Example 9 and that of the present example necessitated another distinction between the two examples. Although the catalyst components of the two examples both employed one washing step after contact with both the magnesium complex and aluminum compound, the reversal in sequence required that the washing step in this example was subsequent to the magnesium complex contacting step, rather than after the aluminum compound contacting step as in inventive Example 9.

A summary of inventive Example 10 is included in Table 5.

### Inventive EXAMPLE 11

### Preparation of Vanadium-Containing Solid Catalyst Component

The preparation of the solid catalyst component of inventive Example 10 was identically reproduced but for the concentrations of the same magnesium complex and aluminum compound used in that example. In this example the solid catalyst component was formulated using 0.7 millimole per gram of HMDS treated silica of each of these two contacting agents rather than 0.5 millimole per gram of HMDS treated silica employed in inventive Example 10.

A summary of inventive Example 11 is included in Table 5.

### INVENTIVE EXAMPLES 12 TO 16 AND COMPARATIVE EXAMPLES 13 AND 14

### Polymerization of Ethylene Using the Solid Catalyst Components of inventive Examples 7 to 11 and Comparative Examples 11 and 12

The polymerization procedure of Comparative Example 7 was repeated but for the substitution of the solid catalyst component used therein with the solid catalyst components prepared in inventive Example 7, Comparative Example 11, inventive Example 8, Comparative Example 12 and inventive Examples 9 to 11 in inventive Example 12, Comparative Example 13, inventive Example 13, Comparative Example 14 and inventive Examples 14 to 16, respectively.

The results of these polymerizations are summarized in Table 5. Table 5 reports catalytic activity of the catalyst systems employed, measured as grams of polymer product per gram of solid catalyst component per hour. In addition, Table 5 sets forth the ethylene polymer products of these polymerizations in terms of mean particle size (MPS), measured in microns by a Malvern [trademark] Model 2600 laser diffraction particle size analyzer, % fines, i.e. the fraction of the polymeric product which has a particle size of less than 90 microns, and bulk density, as measured by ASTM Standard Test Procedure D-1895.

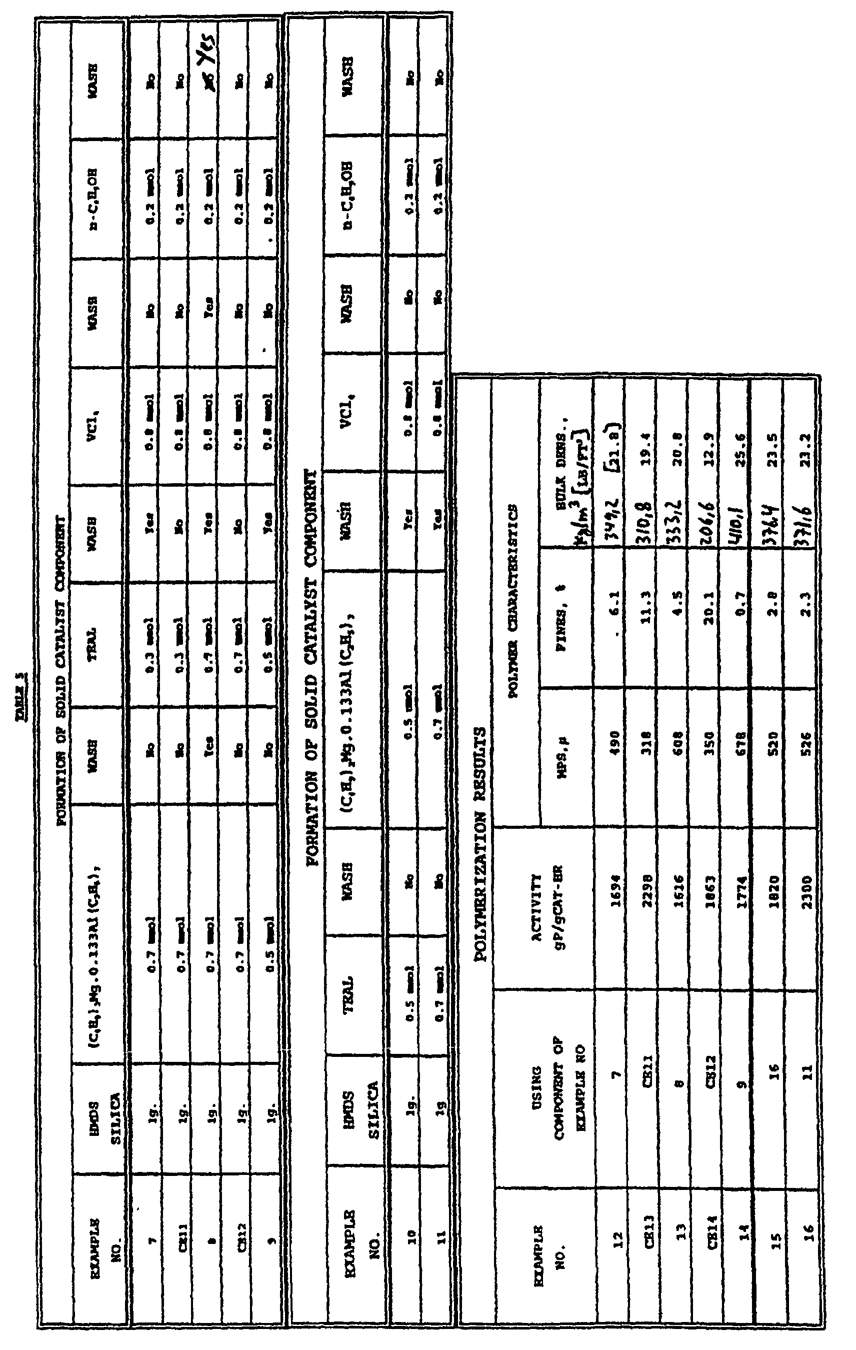

### DISCUSSION OF RESULTS SUMMARIZED IN TABLE 5

The results of Table 5 establish the criticality of at least one wash step in the formation of the solid catalyst component. The polymerization products of inventive Example 9 and Comparative Example 11 utilizing the solid catalyst components of inventive Example 7 and Comparative Example 9, respectively, demonstrate higher mean particle size, lower concentration of fines and higher bulk density in polymers polymerized in catalyst systems that include a solid catalyst component which differs only by the inclusion of a single wash step in its formation. These improvements are noted at the very small cost of slightly lower catalytic activity.

The comparison between the polymerization results of inventive Example 13 and Comparative Example 12 again demonstrates the effect on the polymerization product resulting from the inclusion of washing steps in the formation of the solid catalyst component of inventive Example 8 compared to the absence of these steps in the catalyst component of Comparative Example 10. The same improvements, demonstrated in the comparison between the polymerization products of inventive Example 12 and Comparative Example 11, are present in this latter comparison.

This latter comparison particularly emphasizes the criticality of the washing step or steps in that the formulation utilized a concentration of the Group III metal-containing compound, TEAL, that, although within the scope of the present invention, was outside the most preferred concentration range.

Inventive Examples 15 and 16 demonstrate that the sequence of contacting of the magnesium-containing species and the Group III metal-containing species, in the formation of the catalyst components of inventive Example 10 and 11, respectively, although affecting the morphology of the product polymer, compared to a component formed in reverse order, is far less important than is the presence or absence of a washing step.

The above embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

## Claims

1. A vanadium-containing catalyst system comprising:
(A) a supported catalyst component prepared by the steps of
(a) contacting silica with a hexaalkyldisilazane;
(b) contacting said silica product of step (a) with a contacting agent selected from the group consisting of (1) a compound or complex which includes at least one carbon to magnesium covalent bond, (2) a compound which includes at least one carbon to a metal of Group III of the Periodic Table of the Elements covalent bond and (3) both a compound or complex which includes at least one carbon magnesium covalent bond and a compound which includes at least one carbon to Group III metal covalent bond;
(c) contacting said product of step (b) with whichever of contacting agent (1) and (2) does not contact said silica in step (b), with the proviso that this step is omitted if said contacting agent in step (b) is (3);
(d) washing said product of step (b) or step (c);
(e) contacting said product of step (d) with a vanadium compound which includes at least one halogen atom; and
(f) contacting said product of step (e) with an alcohol;
(B) an organoaluminum compound cocatalyst;
and
(C) a halogen-containing promotor compound having the structural formula
MₜHₛX² ₂ₜ₊₂₋ₛ
where M is carbon, silicon, germanium or tin; X² is the same or different and is halogen; t is an integer of 1 to 5; and s is 0 or an integer of 1 to 11.

2. A catalyst system in accordance with Claim 1 wherein said silica product of step (a) is heated to a temperature in the range of between 100°C and 200°C.

3. A catalyst system in accordance with Claim 1 or 2 wherein hexaalkyldisilazane is hexamethyldisilazane;

4. A catalyst system in accordance with Claim 1 wherein said compound (1) has the structural formula
MgR₂·nAlR¹ ₃
where R is the same or different and is hydrocarbyl; R¹ is the same or different and is hydrocarbyl; and n is 0 to 1.

5. A catalyst system in accordance with Claim 4 where R is the same or different and is C₁-C₈ alkyl; R¹ is the same or different and is C₁-C₈ alkyl; and n is 0 to 0.7.

6. A catalyst system in accordance with Claim 5 wherein R is the same and is n-butyl; R¹ is the same and is ethyl; and n is 0 or 0.133.

7. A catalyst system in accordance with Claim 1 wherein said Group III metal of said compound (2) is aluminum.

8. A catalyst system in accordance with Claim 7 wherein said compound (2) has the structural formula
AlR²R³R⁴
where R², R³ and R⁴ are the same or different and are hydrocarbyl.

9. A catalyst system in accordance with Claim 8 wherein R², R³ and R⁴ are the same or different and are C₂-C₆ alkyl.

10. A catalyst system in accordance with Claim 9 wherein said compound (2) is triethylaluminum

11. A'catalyst system in accordance with Claim 1 wherein said vanadium compound which includes at least one halogen atom is selected from the group consisting of
(i) (R⁵O)ₚVOₘX₃₋ₚ
where R⁵ is C₁-C₁₂ hydrocarbyl; X is halogen; m is 0 or 1 and p is 0, 1 or 2; and
(ii) (R⁵O)_{q}VX_{4-q}
where q is 0, 1, 2 or 3; and R⁵ and X have the meanings given above.

12. A catalyst system in accordance with Claim 11 where p and q are 0; and X is chlorine or bromine.

13. A catalyst system in accordance with Claim 1 wherein said alcohol has the structural formula R⁶OH, where R⁶ is hydrocarbyl.

14. A catalyst system in accordance with Claim 13 wherein R⁶ is C₁-C₁₂ alkyl.

15. A catalyst system in accordance with Claim 14 wherein R⁶ is n-butyl.

16. A catalyst system in accordance with Claim 1 including a washing step subsequent to said step (e).

17. A catalyst system in accordance with Claim 1 including a washing step subsequent to said step (f).

18. A catalyst system in accordance with Claim 1 wherein said contacting agents (1) and (2) are separately introduced and wherein each of these separate contacting steps is followed by a washing step.

19. A catalyst system in accordance with Claim 1 wherein said contacting agents (1) and (2) are introduced together in said step (b).

20. A catalyst system in accordance with Claim 16 including a washing step subsequent to step (f).

21. A catalyst system in accordance with Claim 1 wherein said component (B) is a compound having the structural formula
AlR⁷ ᵣX¹ ₃₋ᵣ
where R⁷ is the same or different and is hydrocarbyl; X¹ is halogen; and r is an integer of 1 to 3.

22. A catalyst system in accordance with Claim 21 wherein R⁷ is the same or different and is C₁-C₈ alkyl; and X¹ is chlorine or bromine.

23. A catalyst system in accordance with Claim 22 wherein R⁷ is the same or different and is C₁-C₄ alkyl; and r is 3.

24. A catalyst system in accordance with Claim 1 wherein M is carbon; X² is the same or different and is fluorine, chlorine or bromine; t is an integer of 1 to 3; and s is 0 or an integer of 1 to 7.

25. A catalyst system in accordance with Claim 24 wherein said component (C) is selected from the group consisting of carbon tetrachloride, carbon tetrabromide, dichloromethane, dibromomethane, chloroform, tribromomethane, 1,1,1-trichloroethane, 2,2-difluorotetrachloroethane, 1-dichlorofluoro-3-difluorochloropropane, methyl bromide, 1,1-dichloro-2,2,2-trifluoroethane, dichlorofluoromethane, trichlorofluoromethane and heptachloropropane.

26. A catalyst system in accordance with Claim 1 wherein said components (A) and (B) are present in concentrations such that the molar ratio of aluminum in said component (B) to vanadium in said component (A) is in the range of between 10:1 and 100:1.

27. A catalyst system in accordance with Claim 26 wherein component (B) and component (C) are present such that the molar ratio of aluminum in said component (B) to the number of moles of said halogen-containing promoter compound of said component (C) is in the range of between 0.05:1 and 20.0:1.

28. A catalyst system in accordance with Claim 27 wherein said molar ratio of aluminum in said component (B) to vanadium in said component (A) is in the range of between 15:1 and 80:1; and said molar ratio aluminum in said component (B) to the number of moles of said halogen-containing promoter compound of said component (C) is in the range of between 0.5:1 and 3.0:1.

29. A catalyst system in accordance with Claim 28 wherein said molar ratio of aluminum in said component (B) to vanadium in said component (A) is in the range of between 20:1 and 60:1; and said molar ratio of aluminum in said component (B) to the number of moles of said halogen-containing promoter compound of said component (C) is in the range of between 0.50:1 and 2.0:1.

30. A catalyst system in accordance with Claim 29 wherein said vanadium compound used in the formation of component (A) is vanadium tetrachloride, said organoaluminum compound of component (B) is triethylaluminum and said halogen-containing promoter compound of component (C) is dibromomethane.

31. A vanadium-containing catalyst component formed by the steps which comprise:
(a) contacting silica particles with a hexaalkyldisilazane;
(b) disposing said product of step (a) in an inert hydrocarbon liquid under ambient conditions, whereby a slurry is formed;
(c) contacting said slurry with a contacting agent selected from the group consisting of (1) a compound or complex which includes at least one carbon to magnesium covalent bond, (2) a compound which includes at least one carbon to metal of Group III of the Periodic Table of the Elements covalent bond and (3) a mixture thereof wherein said compound or complex (1) is introduced into the slurry at a concentration in the range of between 0.1 millimole and 2.0 millimoles of magnesium of said compound or complex (1) per gram of silica and/or said compound (2) is introduced into said slurry at a concentration in the range between 0.1 millimole and 2.0 millimoles of Group III, metal of said compound (2) per gram of silica;
(d) contacting the product of step (c) with whichever of compound or complex (1) and compound (2) does not contact said preheated silica in step (c), said concentration of said compound or complex (1) or compound (2) per gram of silica being the concentration of that compound recited in said step (c), with the proviso that this step is omitted if (3) a mixture of compound or complex (1) and compound (2) is introduced into said slurry in step (c);
(e) washing said product of step (c) or (d) with said inert hydrocarbon liquid slurrying agent;
(f) contacting the product of step (e) with a vanadium compound which includes at least one halogen atom in a concentration such that between 0.2 millimole and 2.0 millimoles of vanadium are present per gram of silica; and
(g) contacting the product of step (f) with an alcohol in a concentration such that between 0.1 millimole and 2.0 millimole of alcohol are present per gram of silica.

32. A catalyst component in accordance with Claim 31 wherein said compound or complex (1) has the structural formula
MgR₂·nAlR¹ ₃
where R is the same or different and is hydrocarbyl; R¹ is the same or different and is hydrocarbyl; and n is 0 to 1, and is present in a concentration in the range of between 0.15 millimole and 1.4 millimoles of magnesium per gram of silica.

33. A catalyst component in accordance with Claim 32 wherein said compound (2) has the structural formula AlR²R³R⁴, where R², R³ and R⁴ are the same or different and are alkyl, and is present in a concentration in the range of between 0.15 millimole and 1.4 millimoles of aluminum per gram of silica.

34. A catalyst component in accordance with Claim 33 wherein said vanadium compound is selected from the group consisting of VOCl₃, VOBr₃, VCl₄, VBr₄, VCl₃ and VBr₃ and is present in a concentration in the range of between 0.4 millimole and 1.2 millimoles of vanadium per gram of silica.

35. A catalyst component in accordance with Claim 34 wherein said vanadium compound and said alcohol is present such that the molar ratio of said alcohol to said vanadium compound is no more than 1.

36. A catalyst component in accordance with Claim 35 wherein said molar ratio of said alcohol to said vanadium compound is in the range of between 0.05:1 and 1:1.

37. A catalyst component in accordance with Claim 36 wherein said alcohol has the structural formula R⁶OH, where R⁶ is C₁-C₁₂ alkyl and is present in a concentration in the range of between 0.15 millimole and 1.0 millimole per gram of silica.

38. A catalyst component in accordance with Claim 37 wherein said inert hydrocarbon liquid is a C₅ to C₈ alkane.

39. A catalyst component in accordance with Claim 38 wherein said compound or complex (1) is present in a, concentration in the range of between 0.2 millimole and 1.0 millimole of magnesium per gram of silica and wherein R is n-butyl; R¹ is ethyl; and n is 0 or 0.133.

40. A catalyst component in accordance with Claim 39 wherein said compound (2) is present in a concentration in the range of between 0.2 millimole and 1.0 millimole of aluminum per gram of silica and wherein R², R³ and R⁴ are the same and are ethyl.

41. A catalyst component in accordance with Claim 40 wherein said vanadium compound is selected from the group consisting of VOCl₃, VCl₄ and VCl₃ and is present in a concentration in the range of between 0.6 millimole and 0.9 millimole of vanadium per gram of silica.

42. A catalyst component in accordance with Claim 41 wherein said molar ratio of said alcohol to said vanadium compound is in the range of between 0.1:1 and 0.6:1.

43. A catalyst component in accordance with Claim 42 wherein said alcohol is **characterized by** R⁶ being C₁-C₈ alkyl and by being present in a concentration in the range of between 0.2 millimole and 0.8 millimole per gram of silica.

44. A catalyst component in accordance with Claim 31 wherein said hexaalkyldisilazane is hexamethyldisilazane.

45. A catalyst component in accordance with Claim 44 wherein said silica product of step (a) is heated at a temperature of between 100°C and 200°C for 4 to 6 hours.

46. A catalyst component in accordance with Claim 43 or 44 wherein R⁶ is C₂-C₆ alkyl and said molar ratio of said alcohol to said vanadium compound is in the range of between 0.2:1 and 0.3:1.

47. A catalyst component in accordance with Claim 46 wherein said compound or complex (1), said compound (2), said vanadium compound and said alcohol is introduced into said slurry as a solution wherein the solvent is an alkane identical to said inert hydrocarbon liquid slurrying agent.

48. A catalyst component in accordance with Claim 47 wherein inert hydrocarbon liquid slurrying agent and solvent is heptane.

49. A catalyst component in accordance with Claim 48 wherein said step (b) involves contact with said compound or complex (1) and said step (c) involves contact with said compound (2).

50. A catalyst component in accordance with claim 47 wherein said step (b) involves contact with said compound (2) and said step (c) involves contact with said compound or complex (1).

51. A catalyst component in accordance with Claim 47 wherein said step (b) involves contact with (3) a mixture of said compound or complex (1) and said compound (2); and wherein said step (c) is omitted.

52. A catalyst component in accordance with Claim 47 wherein said product of step (f) is washed with said alkane slurrying agent.

53. A catalyst component in accordance with Claim 52 wherein said product of step (g) is washed with said alkane slurrying agent.

54. A catalyst component in accordance with Claim 53 wherein said step (b) involves contact with said component or complex (1) and said step (c) involves contact with said compound (2) and wherein said products of steps (b) and (c) are washed with said alkane slurrying agent.

55. A catalyst component in accordance with Claim 53 wherein said step (b) involves contact with said compound (2) and said step (c) involves contact with said compound or complex (1) and wherein said products of step (b) and (c) are washed with said alkane slurrying agent.

56. A catalyst component in accordance with Claim 53 wherein said step (b) involves contact with (3) a mixture of said compound or complex (1) and said compound (2); and wherein said step (c) is omitted.

57. A catalyst component in accordance with Claim 53 wherein inert hydrocarbon liquid slurrying agent solvent is heptane.

58. A catalyst system in accordance with Claim 1 wherein said halogen-containing promoter compound has the structural formula CₜHₛX²₂ₜ₊₂₋ₛ where X² is the same or different and is fluorine, chlorine or bromine; t is an integer of 1 to 3 and s is O or an integer of 1 to 7.

59. A catalyst system in accordance with Claim 1 wherein said halogen-containing promoter compound is trichlorofluormethane or dibromomethane.

## Patentansprüche

1. Vanadium-haltiges Katalysatorsystem, umfassend:
(A) eine Katalysatorkomponente auf einem Träger, hergestellt durch die Schritte:
(a) Kontaktieren von Siliciumdioxid mit einem Hexaalkyldisilazan;
(b) Kontaktieren des Siliciumdioxidprodukts aus Schritt (a) mit einem Kontaktierungsmittel, ausgewählt aus der Gruppe aus (1) einer Verbindung oder einem Komplex, die oder der wenigstens eine kovalente Bindung von Kohlenstoff zu Magnesium enthält, (2) eine Verbindung, die wenigstens eine kovalente Bindung von Kohlenstoff zu einem Metall der Gruppe III des Periodensystems enthält und (3) sowohl eine Verbindung oder einen Komplex, die oder der wenigstens eine kovalente Bindung von Kohlenstoff zu Magnesium enthält, als auch eine Verbindung, welche wenigstens eine kovalente Bindung von Kohlenstoff zu einem Metall der Gruppe m enthält;
(c) Kontaktieren des Produkts aus Schritt (b) mit demjenigen Kontaktierungsmittel aus (1) und (2), welches in Schritt (b) nicht mit dem Siliciumdioxid kontaktiert wurde, unter der Vorgabe, dass dieser Schritt ausgelassen wird, falls das Kontaktierungsmittel (b) gleich (3) ist;
(d) Waschen des Produkts aus Schritt (b) oder Schritt (c);
(e) Kontaktieren des Produkts aus Schritt (d) mit einer Vanadiumverbindung, welche wenigstens ein Halogenatom enthält; und
(f) Kontaktieren des Produkts aus Schritt (e) mit einem Alkohol;
(B) einen Organoaluminium-Cokatalysator; und
(C) eine Halogen-haltige Promotorverbindung der Strukturformel
MₜHₛX² ₂ₜ₊₂₋ₛ
worin M für Kohlenstoff, Silicium, Germanium oder Zinn steht; X² gleich oder verschieden ist und für Halogen steht; t für eine ganze Zahl von 1 bis 5 steht und s für 0 oder eine ganze Zahl von 1 bis 11 steht.

2. Katalysatorsystem nach Anspruch 1, worin das Siliciumdioxidprodukt aus Schritt (a) auf eine Temperatur im Bereich zwischen 100°C und 200°C erwärmt wird.

3. Katalysatorsystem nach Anspruch 1 oder 2, worin das Hexaalkyldisilazan Hexamethyldisilazan ist.

4. Katalysatorsystem nach Anspruch 1, worin die Verbindung (1) die Strukturformel
MgR₂.nAlR¹ ₃
hat, worin R gleich oder verschieden ist und für Hydrocarbyl steht; R¹ gleich oder verschieden ist und für Hydrocarbyl steht; und n für 0 bis 1 steht.

5. Katalysatorsystem nach Anspruch 4, worin R gleich oder verschieden ist und für C₁-C₈-Alkyl steht; R¹ gleich oder verschieden ist und für C₁-C₈-Alkyl steht und n für 0 bis 0,7 steht.

6. Katalysatorsystem nach Anspruch 5, worin R gleich ist und für n-Butyl steht; R¹ gleich ist und für Ethyl steht; und n für 0 oder 0,133 steht.

7. Katalysatorsystem nach Anspruch 1, worin das Metall der Gruppe III der Verbindung (2) Aluminium ist.

8. Katalysatorsystem nach Anspruch 7, worin die Verbindung (2) die Strukturformel
AlR²R³R⁴
hat, worin R², R³ und R⁴ gleich oder verschieden sind und für Hydrocarbyl stehen.

9. Katalysatorsystem nach Anspruch 8, worin R², R³ und R⁴ gleich oder verschieden sind und für C₂-C₆-Alkyl stehen.

10. Katalysatorsystem nach Anspruch 9, worin die Verbindung (2) Triethylaluminium ist.

11. Katalysatorsystem nach Anspruch 1, worin die Vanadiumverbindung, welche wenigstens ein Halogenatom enthält, aus der Gruppe aus
(i) (R⁵O)ₚVOₘX₃₋ₚ,
worin R⁵ für C₁-C₁₂-Hydrocarbyl, X für Halogen, m für 0 oder 1 und p für 0, 1 oder 2 steht; und
(ii) (R⁵O)_{q}VX_{4-q},
worin q für 0, 1, 2 oder 3 steht und R⁵ und X die gleiche Bedeutung wie oben haben,
ausgewählt ist.

12. Katalysatorsystem nach Anspruch 11, worin p und q gleich 0 sind und X für Chlor oder Brom steht.

13. Katalysatorsystem nach Anspruch 1, worin der Alkohol die Strukturformel R⁶OH besitzt, worin R⁶ für Hydrocarbyl steht.

14. Katalysatorsystem nach Anspruch 13, worin R⁶ für C₁-C₁₂-Alkyl steht.

15. Katalysatorsystem nach Anspruch 14, worin R⁶ für n-Butyl steht.

16. Katalysatorsystem nach Anspruch 1, umfassend einen Waschschritt im Anschluss an Schritt (e).

17. Katalysatorsystem nach Anspruch 1, umfassend einen Waschschritt im Anschluss an Schritt (f).

18. Katalysatorsystem nach Anspruch 1, worin die Kontaktierungsmittel (1) und (2) getrennt voneinander eingebracht werden und worin jeder dieser einzelnen Kontaktierungsschritte von einem Waschschritt gefolgt wird.

19. Katalysatorsystem nach Anspruch 1, worin die Kontaktierungsmittel (1) und (2) zusammen in dem Schritt (b) eingebracht werden.

20. Katalysatorsystem nach Anspruch 16, umfassend einen Waschschritt im Anschluss an Schritt (f).

21. Katalysatorsystem nach Anspruch 1, worin die Komponente (B) eine Verbindung der Strukturformel
AlR⁷ ᵣX¹ ₃₋ᵣ
ist, worin R⁷ gleich oder verschieden ist und für Hydrocarbyl steht; X¹ für Halogen steht und r eine ganze Zahl von 1 bis 3 ist.

22. Katalysatorsystem nach Anspruch 21, worin R⁷ gleich oder verschieden ist und für C₁-C₈-Alkyl steht; und X¹ für Chlor oder Brom steht.

23. Katalysatorsystem nach Anspruch 22, worin R⁷ gleich oder verschieden ist und für C₁-C₄-Alkyl steht und r gleich 3 ist.

24. Katalysatorsystem nach Anspruch 1, worin M für Kohlenstoff steht; X² gleich oder verschieden ist und für Fluor, Chlor oder Brom steht; t eine ganze Zahl von 1 bis 3 ist und s für 0 oder eine ganze Zahl von 1 bis 7 steht.

25. Katalysatorsystem nach Anspruch 24, worin die Komponente (C) ausgewählt ist aus der Gruppe aus Tetrachlorkohlenstoff, Tetrabromkohlenstoff, Dichlormethan, Dibrommethan, Chloroform, Tribrommethan, 1,1,1-Trichlorethan, 2,2-Difluortetrachlorethan, 1-Dichlorfluor-3-difluorchlorpropan, Methylbromid, 1,1-Dichlor-2,2,2-trifluorethan, Dichlorfluormethan, Trichlorfluormethan und Heptachlorpropan.

26. Katalysatorsystem nach Anspruch 1, worin die Komponenten (A) und (B) in Konzentrationen vorliegen, die derart sind, dass das Molverhältnis von Aluminium in der Komponente (B) zu Vanadium in der Komponente (A) im Bereich zwischen 10:1 und 100:1 liegt.

27. Katalysatorsystem nach Anspruch 26, worin die Komponente (B) und die Komponente (C) derart vorliegen, dass das Molverhältnis von Aluminium in der Komponente (B) zu der Anzahl Molen der Halogen-haltigen Promotorverbindung der Komponente (C) im Bereich zwischen 0,05:1 und 20,0:1 liegt.

28. Katalysatorsystem nach Anspruch 27, worin das Molverhältnis von Aluminium in der Komponente (B) zu Vanadium in der Komponente (A) im Bereich zwischen 15:1 und 80:1 liegt und das Molverhältnis von Aluminium in der Komponente (B) zu den Anzahl Molen der Halogen-haltigen Promotor-Verbindung der Komponente (C) im Bereich zwischen 0,5:1 und 3,0:1 liegt.

29. Katalysatorsystem nach Anspruch 28, worin das Molverhältnis von Aluminium in der Komponente (B) zu Vanadium in der Komponente (A) im Bereich zwischen 20:1 und 60:1 liegt und das Molverhältnis von Aluminium in der Komponente (B) zu den Anzahl Molen der Halogen-haltigen Promotorverbindung der Komponente (C) im Bereich zwischen 0,50:1 und 2,0:1 liegt.

30. Katalysatorsystem nach Anspruch 29, worin die bei der Bildung der Komponente (A) verwendete Vanadiumverbindung Vanadiumtetrachlorid ist, die Organoaluminiumverbindung aus Komponente (B) Triethylaluminium ist und die Halogen-haltige Promotorverbindung der Komponente (C) Dibrommethan ist.

31. Vanadium-haltige Katalysatorkomponente, gebildet durch die Schritte, umfassend:
(a) Kontaktieren von Siliciumdioxidteilchen mit einem Hexaalkyldisilazan;
(b) Verteilen des Produkts aus Schritt (a) bei Umgebungsbedingungen in einem inerten flüssigen Kohlenwasserstoff, wobei eine Aufschlämmung entsteht;
(c) Kontaktieren der Aufschlämmung mit einem Kontaktierungsmittel, ausgewählt aus der Gruppe aus (1) einer Verbindung oder einem Komplex, die oder der wenigstens eine kovalente Bindung von Kohlenstoff zu Magnesium enthält, (2) eine Verbindung, welche wenigstens eine kovalente Bindung von Kohlenstoff zu einem Metall der Gruppe III des Periodensystems der Elemente enthält und (3) ein Gemisch daraus, wobei die Komponente oder der Komplex (1) mit einer Konzentration im Bereich zwischen 0,1 mmol und 2,0 mmol Magnesium von der Verbindung oder des Komplexes (1) pro Gramm Siliciumdioxid und/oder die Verbindung (2) mit einer Konzentration im Bereich zwischen 0,1 mmol und 2,0 mmol des Metalls der Gruppe III von der Verbindung (2) pro Gramm Siliciumdioxid in die Aufschlämmung eingebracht wird;
(d) Kontaktieren des Produkts aus Schritt (c) mit demjenigen aus der Verbindung oder dem Komplex (1) und der Verbindung (2), der in Schritt (c) nicht mit dem vorgewärmten Siliciumdioxid in Verbindung kommt, wobei die Konzentration der Verbindung oder des Komplexes (1) oder der Verbindung (2) pro Gramm Siliciumdioxid der Konzentration der in Schritt (c) zitierten Verbindung entspricht, unter der Vorgabe, dass dieser Schritt ausgelassen wird, falls (3), ein Gemisch aus der Verbindung oder dem Komplex (1) und der Verbindung (2), in Schritt (c) in die Aufschlämmung eingebracht wird;
(e) Waschen des Produkts aus Schritt (c) oder (d) mit dem inerten, flüssigen Kohlenwasserstoff-Aufschlämmungsmittel;
(f) Kontaktieren des Produkts aus Schritt (e) mit einer Vanadiumverbindung, welche wenigstens ein Halogenatom enthält, in einer Konzentration, so dass von 0,2 mmol und 2,0 mmol Vanadium pro Gramm Siliciumdioxid vorliegen; und
(g) Kontaktieren des Produkts aus Schritt (f) mit einem Alkohol mit einer Konzentration, die derart ist, dass von 0,1 mmol und 2,0 mmol des Alkohols pro Gramm Siliciumdioxid vorliegen.

32. Katalysatorkomponente nach Anspruch 31, worin die Verbindung oder der Komplex (1) die Strukturformel
MgR₂ . nAlR¹ ₃
hat, worin R gleich oder verschieden ist und für Hydrocarbyl steht; R¹ gleich oder verschieden ist und für Hydrocarbyl steht; und n für 0 und 1 steht, und in einer Konzentration im Bereich zwischen 0,15 mmol und 1,4 mmol Magnesium pro Gramm Siliciumdioxid vorliegt.

33. Katalysatorkomponente nach Anspruch 32, worin die Verbindung (2) die Strukturformel AlR²R³R⁴ hat, worin R², R³ und R⁴ gleich oder verschieden sind und für Alkyl stehen, und in einer Konzentration im Bereich zwischen 0,15 mmol und 1,4 mmol Aluminium pro Gramm Siliciumdioxid vorliegt.

34. Katalysatorkomponente nach Anspruch 33, worin die Vanadiumverbindung ausgewählt ist aus der Gruppe aus VOCl₃, VOBr₃, VCl₄, VBr₄, VCl₃ und VBr₃ und in einer Konzentration im Bereich zwischen 0,4 mmol und 1,2 mmol Vanadium pro Gramm Siliciumdioxid vorliegt.

35. Katalysatorkomponente nach Anspruch 34, worin die Vanadiumverbindung und der Alkohol derart vorliegen, dass das Molverhältnis von dem Alkohol zu der Vanadiumverbindung nicht über 1 liegt.

36. Katalysatorkomponente nach Anspruch 35, worin das Molverhältnis von dem Alkohols zu der Vanadiumverbindung im Bereich zwischen 0,05:1 und 1:1 ist.

37. Katalysatorkomponente nach Anspruch 36, worin der Alkohol die Strukturformel R⁶OH hat, worin R⁶ für C₁-C₁₂-Alkyl steht, und in einer Konzentration im Bereich zwischen 0,15 mmol und 1,0 mmol pro Gramm Siliciumdioxid vorliegt.

38. Katalysatorkomponente nach Anspruch 37, worin der inerte, flüssige Kohlenwasserstoff ein C₅-C₈-Alkan ist.

39. Katalysatorkomponente nach Anspruch 38, worin die Verbindung oder der Komplex (1) in einer Konzentration im Bereich zwischen 0,2 mmol und 1,0 mmol Magnesium pro Gramm Siliciumdioxid vorliegt und worin R für n-Butyl, R¹ für Ethyl und n für 0 oder 0,133 steht.

40. Katalysatorkomponente nach Anspruch 39, worin die Verbindung (2) in einer Konzentration im Bereich zwischen 0,2 mmol und 1,0 mmol Aluminium pro Gramm Siliciumdioxid vorliegt und worin R², R³ und R⁴ gleich sind und für Ethyl stehen.

41. Katalysatorkomponente nach Anspruch 40, worin die Vanadiumverbindung ausgewählt ist aus der Gruppe aus VOCl₃, VCl₄ und VCl₃ und in einer Konzentration im Bereich zwischen 0,6 mmol und 0,9 mmol Vanadium pro Gramm Siliciumdioxid vorliegt.

42. Katalysatorkomponente nach Anspruch 41, worin das Molverhältnis von dem Alkohol zu der Vanadiumverbindung im Bereich zwischen 0,1:1 und 0,6:1 liegt.

43. Katalysatorkomponente nach Anspruch 42, worin der Alkohol **dadurch gekennzeichnet ist, dass** R⁶ für C₁-C₈-Alkyl steht und er in einer Konzentration im Bereich zwischen 0,2 mmol und 0,8 mmol pro Gramm Siliciumdioxid vorliegt.

44. Katalysatorkomponente nach Anspruch 31, worin das Hexaalkyldisilazan Hexamethyldisilazan ist.

45. Katalysatorkomponente nach Anspruch 44, worin das Siliciumdioxidprodukt aus Schritt (a) 4 bis 6 Stunden bei einer Temperatur zwischen 100°C und 200°C erwärmt wird.

46. Katalysatorkomponente nach Anspruch 43 oder 44, worin R⁶ für C₂-C₆-Alkyl steht und das Molverhältnis von dem Alkohol zu der Vanadiumverbindung in dem Bereich zwischen 0,2:1 und 0,3:1 liegt.

47. Katalysatorkomponente nach Anspruch 46, worin die Verbindung oder der Komplex (1), die Verbindung (2), die Vanadiumverbindung und der Alkohol als Lösung in die Aufschlämmung eingebracht werden, wobei das Lösungsmittel ein Alkan ist, das mit dem inerten, flüssigen Kohlenwasserstoff-Aufschlämmungsmittel identisch ist.

48. Katalysatorkomponente nach Anspruch 47, worin das inerte, flüssige Kohlenwasserstoff-Aufschlämmungs- und Lösungsmittel Heptan ist.

49. Katalysatorkomponente nach Anspruch 48, worin der Schritt (b) den Kontakt mit der Verbindung oder dem Komplex (1) umfasst, und der Schritt (c) den Kontakt mit der Verbindung (2) umfasst.

50. Katalysatorkomponente nach Anspruch 47, worin der Schritt (b) den Kontakt mit der Verbindung (2) umfasst, und der Schritt (c) den Kontakt mit der Verbindung oder dem Komplex (1) umfasst.

51. Katalysatorkomponente nach Anspruch 47, worin der Schritt (b) den Kontakt mit (3), einem Gemisch aus der Verbindung oder dem Komplex (1) und der Verbindung (2), umfasst; und worin der Schritt (c) ausgelassen wird.

52. Katalysatorkomponente nach Anspruch 47, worin das Produkt aus Schritt (f) mit dem alkanischen Aufschlämmungsmittel gewaschen wird.

53. Katalysatorkomponente nach Anspruch 52, worin das Produkt aus Schritt (g) mit dem alkanischen Aufschlämmungsmittel gewaschen wird.

54. Katalysatorkomponente nach Anspruch 53, worin der Schritt (b) den Kontakt mit der Komponente oder dem Komplex (1) umfasst und der Schritt (c) den Kontakt mit der Verbindung (2) umfasst und worin die Produkte aus den Schritten (b) und (c) mit dem alkanischen Aufschlämmungsmittel gewaschen werden.

55. Katalysatorkomponente nach Anspruch 53, worin der Schritt (b) den Kontakt mit der Verbindung (2) umfasst und der Schritt (c) den Kontakt mit der Verbindung oder dem Komplex (1) umfasst und worin die Produkte der Schritte (b) und (c) mit dem alkanischen Aufschlämmungsmittel gewaschen werden.

56. Katalysatorkomponente nach Anspruch 53, worin der Schritt (b) den Kontakt mit (3), einem Gemisch der Verbindung oder des Komplexes (1) und der Verbindung (2), umfasst; und worin der Schritt (c) ausgelassen wird.

57. Katalysatorkomponente nach Anspruch 53, worin das inerte, flüssige Kohlenwasserstoff-Aufschlämmungs-Lösungsmittel Heptan ist.

58. Katalysatorsystem nach Anspruch 1, worin die Halogen-haltige Promotorverbindung die Strukturformel CₜHₛX²₂ₜ₊₂₋ₛ hat, worin X² gleich oder verschieden ist und für Fluor, Chlor oder Brom steht; t eine ganze Zahl von 1 bis 3 ist und s für 0 oder eine ganze Zahl von 1 bis 7 steht.

59. Katalysatorsystem nach Anspruch 1, worin die Halogen-haltige Promotorverbindung Trichlorfluormethan oder Dibrommethan ist.

## Revendications

1. Système de catalyseur contenant du vanadium comprenant :
(A) un composant catalyseur supporté préparé par les étapes consistant à :
(a) mettre en contact de la silice avec un hexaalkyldisilazane ;
(b) mettre en contact ledit produit à base de silice de l'étape (a) avec un agent de mise en contact choisi dans le groupe constitué par (1) un composé ou un complexe qui comprend au moins une liaison covalente carbone à magnésium, (2) un composé qui comprend au moins une liaison covalente carbone à un métal du groupe III du tableau périodique des éléments et (3) à la fois un composé ou un complexe qui comprend au moins une liaison covalente carbone à magnésium et un composé qui comprend au moins une liaison covalente carbone à un métal du groupe III ;
(c) mettre en contact ledit produit de l'étape (b) avec l'un quelconque des agents de mise en contact (1) et (2) qui n'est pas entré en contact avec ladite silice dans l'étape (b), à condition que cette étape soit omise si ledit agent de mise en contact dans l'étape (b) est le composé (3) ;
(d) laver ledit produit de l'étape (b) ou de l'étape (c) ;
(e) mettre en contact ledit produit de l'étape (d) avec un composé du vanadium qui comprend au moins un atome d'halogène ; et
(f) mettre en contact ledit produit de l'étape (e) avec un alcool ;
(B) un co-catalyseur de type composé organoaluminium ; et
(C) un composé promoteur contenant un atome d'halogène ayant la formule structurelle :
MₜHₛX² ₂ₜ₊₂₋ₛ
dans laquelle M est un atome de carbone, de silicium, de germanium ou d'étain ; X² est identique ou différent et est un atome d'halogène ; t est un nombre entier de 1 à 5 ; et s vaut 0 ou est un nombre entier de 1 à 11.

2. Système de catalyseur selon la revendication 1, dans lequel ledit produit à base de silice de l'étape (a) est chauffé à une température dans la plage comprise entre 100°C et 200°C.

3. Système de catalyseur selon la revendication 1 ou 2,
dans lequel l'hexaalkyldisilazane est l'hexaméthyldisilazane.

4. Système de catalyseur selon la revendication 1, dans lequel ledit composé (1) a la formule structurelle :
MgR₂,nAlR¹ ₃
dans laquelle R est identique ou différent et est un groupe hydrocarbyle ; R¹ est identique ou différent et est un groupe hydrocarbyle ; et n vaut 0 à 1.

5. Système de catalyseur selon la revendication 4, dans lequel R est identique ou différent et est un groupe alkyle en C₁-C₈ ; R¹ est identique ou différent et est un groupe alkyle en C₁-C₈ ; et n vaut 0 à 0,7.

6. Système de catalyseur selon la revendication 5, dans lequel R est identique et est un groupe n-butyle ; R¹ est identique et est un groupe éthyle ; et n vaut 0 ou 0,133.

7. Système de catalyseur selon la revendication 1, dans lequel ledit métal du groupe III dudit composé (2) est l'aluminium.

8. Système de catalyseur selon la revendication 7, dans lequel ledit composé (2) a la formule structurelle :
AlR²R³R⁴
dans laquelle R², R³ et R⁴ sont identiques ou différents et sont des groupes hydrocarbyle.

9. Système de catalyseur selon la revendication 8, dans lequel R², R³ et R⁴ sont identiques ou différents et sont des groupes alkyle en C₂-C₆.

10. Système de catalyseur selon la revendication 9, dans lequel ledit composé (2) est le triéthylaluminium.

11. Système de catalyseur selon la revendication 1, dans lequel ledit composé du vanadium qui comprend au moins un atome d'halogène est choisi dans le groupe constitué par :
(i) (R⁵O)ₚVOₘX₃₋ₚ
où R⁵ est un groupe hydrocarbyle en C₁-C₁₂ ; X est un atome d'halogène ; m vaut 0 ou 1 et p vaut 0, 1 ou 2 ; et :
(ii) (R⁵O)_{q}VX_{4-q}
où q vaut 0, 1, 2 ou 3 ; et R₅ et X ont les significations données ci-dessus.

12. Système de catalyseur selon la revendication 11, dans lequel p et q valent 0 ; et X est un atome de chlore ou de brome.

13. Système de catalyseur selon la revendication 1, dans lequel ledit alcool a la formule structurelle R⁶OH, où R⁶ est un groupe hydrocarbyle.

14. Système de catalyseur selon la revendication 13, dans lequel R⁶ est un groupe alkyle en C₁-C₁₂.

15. Système de catalyseur selon la revendication 14, dans lequel R⁶ est un groupe n-butyle.

16. Système de catalyseur selon la revendication 1, comprenant une étape de lavage après ladite étape (e).

17. Système de catalyseur selon la revendication 1, comprenant une étape de lavage après ladite étape (f).

18. Système de catalyseur selon la revendication 1, dans lequel lesdits agents de mise en contact (1) et (2) sont introduits séparément et dans lequel chacune de ces étapes de mise en contact séparées est suivie d'une étape de lavage.

19. Système de catalyseur selon la revendication 1, dans lequel lesdits agents de mise en contact (1) et (2) sont introduits ensemble dans ladite étape (b).

20. Système de catalyseur selon la revendication 16, comprenant une étape de lavage après l'étape (f).

21. Système de catalyseur selon la revendication 1, dans lequel ledit composant (B) est un composant ayant la formule structurelle :
AlR⁷ ᵣX¹ ₃₋ᵣ
dans laquelle R⁷ est identique ou différent et est un groupe hydrocarbyle ; X¹ est un atome d'halogène ; et r est un nombre entier de 1 à 3.

22. Système de catalyseur selon la revendication 21, dans lequel R⁷ est identique ou différent et est un groupe alkyle en C₁-C₈ ; et X¹ est un atome de chlore ou de brome.

23. Système de catalyseur selon la revendication 22, dans lequel R⁷ est identique ou différent et est un groupe alkyle en C₁-C₄ ; et r vaut 3.

24. Système de catalyseur selon la revendication 1, dans lequel M est un atome de carbone ; X² est identique ou différent et est un atome de fluor, de chlore ou de brome ; t est un nombre entier de 1 à 3 ; et s vaut 0 ou est un nombre entier de 1 à 7.

25. Système de catalyseur selon la revendication 24, dans lequel ledit composant (C) est choisi dans le groupe constitué par le tétrachlorure de carbone, le tétrabromure de carbone, le dichlorométhane, le dibromométhane, le chloroforme, le tribromoéthane, le 1,1,1-trichloroéthane, le 2,2-difluorotétrachloroéthane, le 1-dichlorofluoro-3-difluorochloropropane, le bromure de méthyle, le 1,1-dichloro-2,2,2-trifluoroéthane, le dichlorofluorométhane, le trichlorofluorométhane et l'heptachloropropane.

26. Système de catalyseur selon la revendication 1, dans lequel lesdits composants (A) et (B) sont présents dans des concentrations telles que le rapport molaire de l'aluminium dans ledit composant (B) au vanadium dans ledit composant (A) est dans la plage comprise entre 10:1 et 100:1.

27. Système de catalyseur selon la revendication 26, dans lequel le composant (B) et le composant (C) sont présents de sorte que le rapport molaire de l'aluminium dans ledit composant (B) au nombre de moles dudit composé promoteur contenant un atome d'halogène dudit composant (C) est dans la plage comprise entre 0,05:1 et 20,0:1.

28. Système de catalyseur selon la revendication 27, dans lequel ledit rapport molaire de l'aluminium dans le composant (B) au vanadium dans ledit composant (A) est dans la plage comprise entre 15:1 et 80:1 ; et ledit rapport molaire de l'aluminium dans ledit composant (B) au nombre de moles dudit composé promoteur contenant un atome d'halogène dans ledit composant (C) est dans la plage comprise entre 0,5:1 et 3,0:1.

29. Système de catalyseur selon la revendication 28, dans lequel ledit rapport molaire de l'aluminium dans le composant (B) au vanadium dans ledit composant (A) est dans la plage comprise entre 20:1 et 60:1 ; et ledit rapport molaire de l'aluminium dans ledit composant (B) au nombre de moles dudit composé promoteur contenant un atome d'halogène dans ledit composant (C) est dans la plage comprise entre 0,50:1 et 2,0:1.

30. Système de catalyseur selon la revendication 29, dans lequel ledit composé du vanadium utilisé dans la formation du composant (A) est le tétrachlorure de vanadium, ledit composé organoaluminium du composant (B) est le triéthylaluminium et ledit composé promoteur contenant un atome d'halogène du composant (C) est le dibromométhane.

31. Composant catalyseur contenant du vanadium formé par les étapes consistant à :
(a) mettre en contact des particules de silice avec un hexaalkyldisilazane ;
(b) placer ledit produit de l'étape (a) dans un liquide hydrocarboné inerte dans des conditions ambiantes, afin de former une suspension ;
(c) mettre en contact ladite suspension avec un agent de mise en contact choisi dans le groupe constitué par (1) un composé ou un complexe qui comprend au moins une liaison covalente carbone à magnésium, (2) un composé qui comprend au moins une liaison covalente carbone à un métal du groupe III du tableau périodique des éléments et (3) un mélange de ceux-ci, dans lequel ledit composé ou complexe (1) est introduit dans la suspension en une concentration dans la plage comprise entre 0,1 millimole et 2,0 millimoles de magnésium dudit composé ou complexe (1) par gramme de silice et/ou ledit composé (2) est introduit dans ladite suspension en une concentration dans la plage comprise entre 0,1 millimole et 2,0 millimoles de métal du groupe III dudit composé (2) par gramme de silice ;
(d) la mise en contact du produit de l'étape (c) avec l'un quelconque parmi le composé ou le complexe (1) et le composé (2) qui n'est pas entré en contact avec ladite silice préchauffée dans l'étape (c), ladite concentration dudit composé ou complexe (1) ou composé (2) par gramme de silice étant la concentration de ce composé indiquée dans ladite étape (C), à condition que cette étape soit omise si (3) un mélange du composé ou du complexe (1) et du composé (2) est introduit dans ladite suspension dans l'étape (c) ;
(e) laver ledit produit de l'étape (c) ou (d) avec ledit agent de mise en suspension de type liquide hydrocarboné inerte ;
(f) mettre en contact le produit de l'étape (c) avec un composé du vanadium qui comprend au moins un atome d'halogène dans une concentration telle qu'entre 0,2 millimole et 2,0 millimoles de vanadium soient présentes par gramme de silice ; et
(g) mettre en contact le produit de l'étape (f) avec un alcool en une concentration telle qu'entre 0,1 millimole et 2,0 millimoles d'alcool soient présentes par gramme de silice.

32. Composant catalyseur selon la revendication 31, dans lequel ledit composé ou complexe (1) a la formule structurelle :
MgR₂,nAlR¹ ₃
dans laquelle R est identique ou différent et est un groupe hydrocarbyle ; R¹ est identique ou différent et est un groupe hydrocarbyle ; et n vaut 0 à 1 et est présent en une concentration dans la plage comprise entre 0,15 millimole et 1,4 millimole de magnésium par gramme de silice.

33. Composant catalyseur selon la revendication 32, dans lequel ledit composé (2) a la formule structurelle AlR²R³R⁴ dans laquelle R², R³ et R⁴ sont identiques ou différents et sont des groupes alkyle et est présent en une concentration dans la plage comprise entre 0,15 millimole et 1,4 millimole d'aluminium par gramme de silice.

34. Composant catalyseur selon la revendication 33, dans lequel ledit composé du vanadium est choisi dans le groupe constitué par VOCl₃, VOBr₃, VCl₄, VBr₄, VCl₃ et VBr₃ et est présent en une concentration dans la plage comprise entre 0,4 millimole et 1,2 millimole de vanadium par gramme de silice.

35. Composant catalyseur selon la revendication 34, dans lequel ledit composé du vanadium et ledit alcool sont présents de telle sorte que le rapport molaire dudit alcool audit composé du vanadium ne soit pas supérieur à 1.

36. Composant catalyseur selon la revendication 35, dans lequel ledit rapport molaire dudit alcool audit composé du vanadium est dans la plage comprise entre 0,05:1 et 1:1.

37. Composant catalyseur selon la revendication 36, dans lequel ledit alcool a la formule structurelle R⁶OH, où R⁶ est un groupe alkyle en C₁-C₁₂ et est présent en une concentration dans la plage comprise entre 0,15 millimole et 1,0 millimole par gramme de silice.

38. Composant catalyseur selon la revendication 37, dans lequel ledit liquide hydrocarboné inerte est un alcane en C₅-C₈.

39. Composant catalyseur selon la revendication 38, dans lequel ledit composé ou complexe (1) est présent en une concentration dans la plage comprise entre 0,2 millimole et 1,0 millimole de magnésium par gramme de silice et dans lequel R est un groupe n-butyle ; R¹ est un groupe éthyle ; et n vaut 0 ou 0,133.

40. Composant catalyseur selon la revendication 39, dans lequel ledit composé (2) est présent en une concentration dans la plage comprise entre 0,2 millimole et 1,0 millimole d'aluminium par gramme de silice et dans lequel R², R³ et R⁴ sont identiques et sont des groupes éthyle.

41. Composant catalyseur selon la revendication 40, dans lequel ledit composé du vanadium est choisi dans le groupe constitué par VOCl₃, VCl₄ et VCl₃ et est présent en une concentration dans la plage comprise entre 0,6 millimole et 0,9 millimole de vanadium par gramme de silice

42. Composant catalyseur selon la revendication 41, dans lequel ledit rapport molaire dudit alcool audit composé du vanadium est dans la plage comprise entre 0,1:1 et 0,6:1.

43. Composant catalyseur selon la revendication 42, dans lequel ledit alcool est **caractérisé en ce que** R⁶ est un groupe alkyle en C₁-C₈ et est présent en une concentration dans la plage comprise entre 0,2 millimole et 0,8 millimole par gramme de silice.

44. Composant catalyseur selon la revendication 31, dans lequel ledit hexaalkyldisilizane est l'hexaméthyldisilasane.

45. Composant catalyseur selon la revendication 44, dans lequel ledit produit à base de silice de l'étape (a) est chauffé à une température comprise entre 100°C et 200°C pendant 4 à 6 heures.

46. Composant catalyseur selon la revendication 43 ou 44, dans lequel R⁶ est un groupe alkyle en C₁-C₆ et ledit rapport molaire dudit alcool audit composé du vanadium est dans la plage comprise entre 0,2:1 et 0,3:1.

47. Composant catalyseur selon la revendication 46, dans lequel ledit composé ou complexe (1), ledit composé (2), ledit composé du vanadium et ledit alcool sont introduits dans ladite suspension sous forme d'une solution dans laquelle le solvant est un alcane identique audit agent de mise en suspension de type liquide hydrocarboné inerte.

48. Composant catalyseur selon la revendication 47, dans lequel ledit agent de mise en suspension de type liquide hydrocarboné inerte et le solvant sont l'heptane.

49. Composant catalyseur selon la revendication 48, dans lequel ladite étape (b) fait appel à la mise en contact avec ledit composé ou complexe (1) et ladite étape (c) fait appel à la mise en contact avec ledit composé (2).

50. Composant catalyseur selon la revendication 47, dans lequel ladite étape (b) fait appel à la mise en contact avec ledit composé (2) et ladite étape (c) fait appel à la mise en contact avec ledit composé ou complexe (1).

51. Composant catalyseur selon la revendication 47, dans lequel ladite étape (b) fait appel à la mise en contact avec (3) un mélange dudit composé ou complexe (1) et dudit composé (2) ; et dans lequel ladite étape (c) est omise.

52. Composant catalyseur selon la revendication 47, dans lequel ledit produit de l'étape (f) est lavé avec ledit agent de mise en suspension de type alcane.

53. Composant catalyseur selon la revendication 52, dans lequel ledit produit de l'étape (g) est lavé avec ledit agent de mise en suspension de type alcane.

54. Composant catalyseur selon la revendication 53, dans lequel ladite étape (b) fait appel à la mise en contact avec ledit composé ou complexe (1) et ladite étape (c) fait appel à la mise en contact avec ledit composé (2) et dans lequel lesdits produits des étapes (b) et (c) sont lavés avec ledit agent de mise en suspension de type alcane.

55. Composant catalyseur selon la revendication 53, dans lequel ladite étape (b) fait appel à la mise en contact avec ledit composé (2) et ladite étape (c) fait appel à la mise en contact avec ledit composé ou complexe (1) et dans lequel lesdits produits des étapes (b) et (c) sont lavés avec ledit agent de mise en suspension de type alcane.

56. Composant catalyseur selon la revendication 53, dans lequel ladite étape (b) fait appel à la mise en contact avec (3) un mélange dudit composé ou complexe (1) et dudit composé (2) ; et dans lequel ladite étape (c) est omise.

57. Composant catalyseur selon la revendication 53, dans lequel ledit solvant de l'agent de mise en suspension de type liquide hydrocarboné inerte est l'heptane.

58. Système de catalyseur selon la revendication 1, dans lequel ledit composé promoteur contenant un atome d'halogène a la formule structurelle CₜHₛX²₂ₜ₊₂₋ₛ , dans laquelle X² est identique ou différent et est un atome de fluor, de chlore ou de brome ; t est un nombre entier de 1 à 3 ; et s vaut 0 ou est un nombre entier de 1 à 7.

59. Système de catalyseur selon la revendication 1, dans lequel ledit composé promoteur contenant un atome d'halogène est le trichlorofluorométhane ou le dibromométhane.
